(19) **Europäisches Patentamt**
**European Patent Office**
**Office européen des brevets**

(11) **EP 4 624 881 A1**

(12) **EUROPEAN PATENT APPLICATION**
published in accordance with Art. 153(4) EPC

(43) Date of publication:
**01.10.2025 Bulletin 2025/40**

(21) Application number: **23918310.6**

(22) Date of filing: **24.01.2023**

(51) International Patent Classification (IPC):
***G01J 5/48*** (2022.01)          ***G01J 5/60*** (2006.01)
***G01S 3/782*** (2006.01)

(52) Cooperative Patent Classification (CPC):
**G01J 5/48; G01J 5/60; G01S 3/782**

(86) International application number:
**PCT/JP2023/001990**

(87) International publication number:
**WO 2024/157338 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **YOSHIKI, Wataru
Tokyo 100-8310 (JP)**
• **KOBAYASHI, Satoi
Tokyo 100-8310 (JP)**
• **IMAKI, Masaharu
Tokyo 100-8310 (JP)**

(74) Representative: **Pfenning, Meinig & Partner mbB
Patent- und Rechtsanwälte
Theresienhöhe 11a
80339 München (DE)**

(54) **NON-CONTACT TEMPERATURE MEASUREMENT DEVICE AND NON-CONTACT TEMPERATURE MEASUREMENT METHOD**

(57)     A non-contact temperature measurement device (1) includes: a matching processing unit (24) to estimate a correspondence relationship of pixels between images; a positional relationship estimating unit (25) to estimate a positional relationship between an infrared camera (4A, 4B) and an object (A) on the basis of the correspondence relationship of the pixels; a luminance correcting unit (26) to correct luminance corresponding to a temperature in a luminance image on the basis of the positional relationship; and an emissivity correcting unit (27) to estimate emissivity using the correspondence relationship of the pixels and the luminance image and generate a temperature image on the basis of the emissivity, in which the matching processing unit (24) estimates the correspondence relationship of the pixels between images captured by the infrared camera (4A, 4B) in the same light receiving sensitivity wavelength band, and the emissivity correcting unit (27) estimates emissivity using images captured by the infrared camera (4A, 4B) in different light receiving sensitivity wavelength bands.

FIG. 1

EP 4 624 881 A1

**Description**

**TECHNICAL FIELD**

The present disclosure relates to a non-contact temperature measurement device and a non-contact temperature measurement method.

**BACKGROUND ART**

An infrared camera captures an infrared image by detecting infrared light emitted by an object. The infrared image is an image indicating distribution of luminance according to a emission intensity of infrared light emitted by an object, and it is possible to measure a surface temperature of the object by using the infrared image. The relationship between the apparent emission intensity of the object indicated by the infrared image and the actual surface temperature of the object may change depending on the emissivity of infrared light of the object and the positional relationship between the infrared camera and the object.

Here, the emissivity of the infrared light of an object represents a ratio of energy of infrared light emitted from a black body having the same temperature as the object according to Planck's law with energy of the infrared light emitted from the object as 1. Further, the positional relationship between the infrared camera and the object includes, for example, a distance between the infrared camera and the object and an angle of the object with respect to the infrared camera.

In the non-contact temperature measurement of an object using an infrared image, the temperature of the object may be erroneously measured along with a change in the relationship between the apparent emission intensity of the object indicated by the infrared image and the actual surface temperature of the object. On the other hand, the emissivity of the infrared light of the object is estimated, a temperature measurement error of the object is corrected using the emissivity, the positional relationship between the infrared camera and the object is estimated, and the temperature measurement error of the object can be corrected using the positional relationship.

The emission spectrum of infrared light emitted by the object has a different spectrum shape depending on the temperature of the object. By using this characteristic, the emissivity of the infrared light of the object can be estimated, and the positional relationship between the infrared camera and the object can be estimated. For example, it is possible to correct the influence of emissivity on the measurement temperature by specifying a sensitivity curve of infrared light using a plurality of infrared images captured by a plurality of infrared cameras having different lightreceiving sensitivity wavelength bands of infrared light, and estimating the emissivity of the object to be subjected to temperature measurement using the specified sensitivity curve.

For example, Patent Literature 1 describes a target detecting device that estimates a positional relationship between an infrared camera and a target object. The target detecting device described in Patent Literature 1 extracts a target object by performing binarization processing on infrared images of the same visual field captured by a plurality of infrared cameras having different light receiving sensitivity wavelength bands of infrared light and performing pixel matching between the binarized images. Then, the correspondence relationship of pixels between the binarized images in which the target object is captured is specified, and the positional relationship between the infrared camera and the object is estimated on the basis of the specified correspondence relationship of pixels.

Note that since the invention described in Patent Literature 1 is a target detecting device that is mounted on a ship, an aircraft, or the like and captures and detects an object with the sea surface, the sky, or the like as a background, the target object is captured in a dotted manner in an infrared image. Thus, in the binarized image in which the binarization processing is performed on distribution of pixel values corresponding to the temperature of the object, for example, a luminance distribution, the target object is emphasized as a point light source having a higher temperature than the background, and the object is easily extracted from the binarized image.

CITATION LIST

**PATENT LITERATURES**

Patent Literature 1: JP 2016-075615 A

**SUMMARY OF INVENTION**

**TECHNICAL PROBLEM**

In the non-contact temperature measurement of an object using the infrared camera, if the emissivity of the infrared light of the object and the positional relationship between the infrared camera and the object can be estimated using an infrared image obtained by capturing the object of the temperature measurement target by the plurality of infrared cameras having different light receiving sensitivity wavelength bands of infrared light, the influence of these on the measurement temperature can be corrected.

Between infrared images captured by a plurality of infrared cameras having different infrared light receiving sensitivity wavelength bands, distribution of pixel values corresponding to a temperature, for example, a luminance distribution greatly differs between the images.

In Patent Literature 1, since it is assumed that a target object is captured in a dotted manner in an infrared image, the object is emphasized in a point light source manner in a binarized image obtained by binarizing the luminance distribution. Thus, it is easy to specify a common object between binarized images of images captured by the plurality of infrared cameras having different light receiving sensitivity wavelength bands of infrared light, and it is possible to estimate a positional relationship between the infrared camera and the object.

However, when a plurality of objects having various temperatures is captured in infrared images captured by the plurality of infrared cameras having different light receiving sensitivity wavelength bands of infrared light, and a difference between a temperature of an object to be measured for temperature and a temperature of a background or another object is not clear, a difference in luminance distribution corresponding to the temperature is further emphasized between binarized images. In this case, it becomes difficult to determine a correspondence relationship of pixels by pixel matching between the binarized images, and an object cannot be extracted from the image, and a positional relationship between the infrared camera and the object cannot be estimated. Thus, there is a problem that the influence of the positional relationship between the infrared camera and the object on the measurement temperature cannot be corrected.

The present disclosure has been made to solve the above problems, and an object thereof is to provide a non-contact temperature measurement device and a non-contact temperature measurement method capable of correcting an influence of emissivity of infrared light of an object and a positional relationship between an infrared camera and the object on a measured temperature.

## SOLUTION TO PROBLEM

A non-contact temperature measurement device according to the present disclosure includes: a matching processing unit to estimate a correspondence relationship of pixels between a plurality of images obtained by capturing visual fields by a plurality of infrared cameras, respectively, the visual fields including a common region; a positional relationship estimating unit to estimate a positional relationship between the infrared cameras and an object as a temperature measurement target which is present in the common region on a basis of the estimated correspondence relationship of the pixels; a pixel value correcting unit to perform correction of a pixel value corresponding to a temperature on a basis of the estimated positional relationship between the infrared cameras and the object; and an emissivity correcting unit to estimate emissivity of infrared light of the object using the estimated correspondence relationship of the pixels and an image obtained by the correction of the pixel value, and perform generation of an image after the correction of the pixel value is performed on a basis of the estimated emissivity, wherein the matching processing unit estimates the correspondence relationship of the pixels between the plurality of images obtained by capturing the visual fields including the common region by the plurality of the infrared cameras in a same light receiving sensitivity wavelength band, and the emissivity correcting unit estimates the emissivity of infrared light of the object by using the images obtained by capturing the visual fields including the common region by the plurality of the infrared cameras in light receiving sensitivity wavelength bands different from each other, respectively.

## ADVANTAGEOUS EFFECTS OF INVENTION

According to the present disclosure, a correspondence relationship of pixels between images obtained by capturing a visual field including a common region by a plurality of infrared cameras in a same light receiving sensitivity wavelength band is estimated, a positional relationship between the infrared camera and an object as a temperature measurement target present in the common region is estimated on the basis of the estimated correspondence relationship of the pixels, and emissivity of infrared light of the object as a temperature measurement target present in the common region is estimated using images obtained by capturing the visual field including the common region by the plurality of infrared cameras in different light receiving sensitivity wavelength bands.

The positional relationship between the infrared camera and the object can be estimated using the infrared image obtained by capturing the visual field including the common region, and the emissivity of the infrared light of the object can be estimated, so that the non-contact temperature measurement device according to the present disclosure can correct the influence of the emissivity of the infrared light of the object and the positional relationship between the infrared camera and the object on the measurement temperature.

## BRIEF DESCRIPTION OF DRAWINGS

FIG. 1 is a block diagram illustrating a configuration example of a non-contact temperature measurement device according to a first embodiment.
FIG. 2 is a flowchart illustrating an operation of the non-contact temperature measurement device according to the first embodiment.
FIG. 3 is a flowchart illustrating a series of processes of shutter correction.
FIG. 4 is a flowchart illustrating a series of processes of stereo correction.
FIG. 5 is a flowchart illustrating a series of processes of temperature correction.
FIGS. 6A and 6B are block diagrams illustrating a hardware configuration that implements the functions of the non-contact temperature measurement device according to the first embodiment.
FIG. 7 is a block diagram illustrating a configuration example of a non-contact temperature measurement device according to a second embodiment.

FIG. 8 is a flowchart illustrating an operation of the non-contact temperature measurement device according to the second embodiment.

FIG. 9 is a flowchart illustrating a series of processes of filter optimization and temperature correction.

FIG. 10 is a graph illustrating characteristics of a peak wavelength of a black body emission spectrum.

FIG. 11 is a block diagram illustrating a configuration example of a non-contact temperature measurement device according to a third embodiment.

FIG. 12 is a flowchart illustrating an operation of the non-contact temperature measurement device according to the third embodiment.

FIG. 13 is a flowchart illustrating a series of processes of temperature correction and temperature image synthesis.

FIG. 14 is a block diagram illustrating a configuration example of a non-contact temperature measurement device according to a fourth embodiment.

FIG. 15 is a flowchart illustrating an operation of the non-contact temperature measurement device according to the fourth embodiment.

FIG. 16 is a flowchart illustrating a series of processes of shutter high accuracy correction.

**DESCRIPTION OF EMBODIMENTS**

First Embodiment

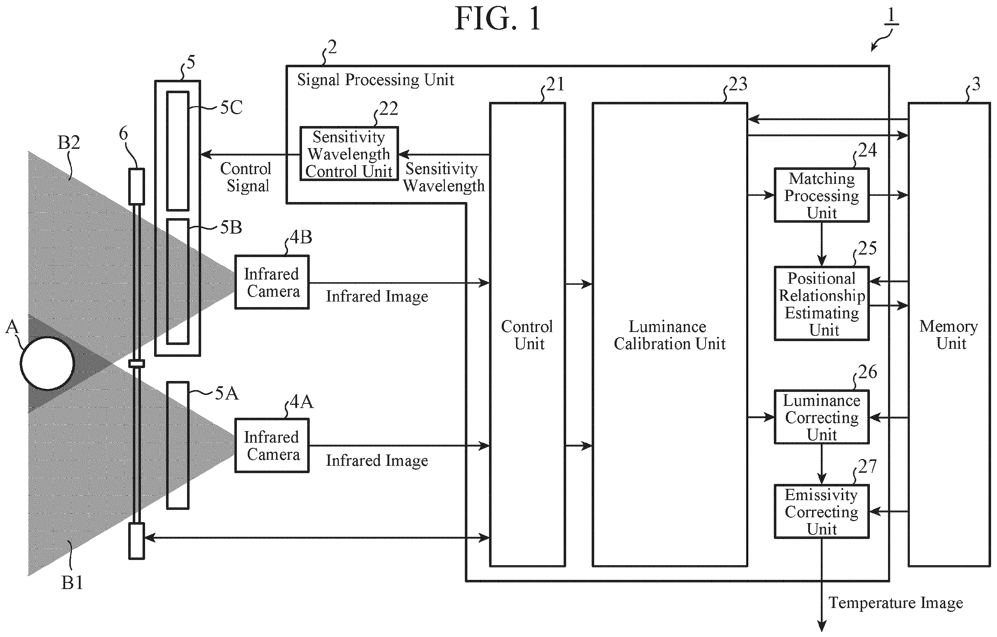

FIG. 1 is a block diagram illustrating a configuration example of a non-contact temperature measurement device 1 according to a first embodiment. In FIG. 1, the non-contact temperature measurement device 1 is a device that measures a temperature of an object A in a non-contact manner using an infrared image obtained by capturing an image of the object A as a temperature measurement target, and includes a signal processing unit 2, a memory unit 3, an infrared camera 4A, an infrared camera 4B, an infrared filter unit 5A, an infrared filter changing unit 5, and a shutter unit 6.

The signal processing unit 2 performs temperature measurement processing of the object A using the infrared images captured by the infrared camera 4A and the infrared camera 4B. The signal processing unit 2 includes a control unit 21, a sensitivity wavelength control unit 22, a luminance calibration unit 23, a matching processing unit 24, a positional relationship estimating unit 25, a luminance correcting unit 26, and an emissivity correcting unit 27. The infrared filter changing unit 5 is a device including an infrared filter unit 5B and an infrared filter unit 5C and having a function of switching the infrared filter unit.

The memory unit 3 is a storage device that stores information generated by signal processing by the luminance calibration unit 23, the matching processing unit 24, the positional relationship estimating unit 25, the luminance correcting unit 26, and the emissivity correcting unit 27 included in the signal processing unit 2, and outputs the information as necessary.

In addition, for example, it is assumed that physical parameters indicating physical characteristics of the infrared camera 4A and the infrared camera 4B are stored in the memory unit 3 as information at the time of shipment.

The infrared camera 4A and the infrared camera 4B convert a temperature change due to absorption of emission energy of infrared light emitted from the object A into an electric signal, and capture an infrared image having a pixel value corresponding to the temperature of the object A. The infrared camera 4A generates an infrared image obtained by capturing a visual field B 1, and the infrared camera 4B generates an infrared image obtained by capturing a visual field B2.

As illustrated in FIG. 1, the visual field B1 and the visual field B2 include a common region, and the infrared camera 4A and the infrared camera 4B are arranged in such a manner that the object A of the temperature measurement target is included in the common region. The infrared camera 4A detects emission light of the object A through the infrared filter unit 5A and generates an infrared image. The infrared camera 4B detects emission light of the object A through the infrared filter unit 5B or the infrared filter unit 5C, and generates an infrared image. The infrared images generated by the infrared camera 4A and the infrared camera 4B are output to the signal processing unit 2.

The light receiving sensitivity wavelength bands of the infrared camera 4A and the infrared camera 4B have, for example, a wavelength band of 8 to 14 micrometers ($\mu$m), which is a long wavelength band, a wavelength band of 3 to 5 $\mu$m, which is a medium wavelength band, or a wavelength band different from, that is, close to, these wavelength bands by a certain wavelength.

Note that the light receiving sensitivity wavelength band of the infrared camera 4A and the infrared camera 4B may be a light receiving sensitivity wavelength band of a detection element of the infrared camera, or may be a light receiving sensitivity wavelength band passing through the infrared filter unit.

The peak wavelength of the emission spectrum of the infrared light from the object A varies depending on the temperature. In general, a emission spectrum of an object around room temperature has a peak in a long wavelength band, but has a peak in a medium wavelength band at a high temperature, for example, about 1000 K. Accordingly, as the infrared camera 4A and the infrared camera 4B, an infrared camera capable of capturing an infrared image in a light receiving sensitivity wavelength band having a peak at an assumed temperature of a temperature measurement target is used.

Each of the infrared camera 4A and the infrared camera 4B includes a detection element that converts emission light into an electric signal, an optical element that focuses the emission light on the detection element, a reading circuit that reads the electric signal from the detection element, an AD conversing unit that converts a signal from the reading circuit into a digital signal, a thermistor that measures the temperature of the camera itself, and the like. As the detection element, a bolometer type, thermopile type, or thermal diode type element may be used. As the condensing element, a reflective optical element such as a mirror and a refractive optical element such as a lens are used. As a material of the lens, Si, Ge, chalcogenide glass, or the like is used.

The infrared camera 4A and the infrared camera 4B may be attached to a common housing, or may be installed separately. In addition, although FIG. 1 illustrates the non-contact temperature measurement device 1 including the two infrared cameras 4 such as the infrared camera 4A and the infrared camera 4B, the non-contact temperature measurement device 1 may include three or more infrared cameras.

The infrared filter changing unit 5 switches between the infrared filter unit 5B and the infrared filter unit 5C to change a wavelength band of infrared light emitted from an object present in the visual field B2 and incident on the infrared camera 4B. For example, the infrared filter changing unit 5 includes a filter wheel and the infrared filter unit 5B and the infrared filter unit 5C in the filter wheel, and the infrared filter unit 5B and the infrared filter unit 5C are switched by the rotation of the filter wheel.

The infrared filter unit 5A limits a wavelength band of infrared light emitted from an object present the in visual field B1 and incident on the infrared camera 4A. The infrared filter unit 5B and the infrared filter unit 5C limit a wavelength band of infrared light emitted from an object present in the visual field B2 and incident on the infrared camera 4B. As the infrared filter unit 5A, the infrared filter unit 5B, and the infrared filter unit 5C, for example, a band pass filter configured by laminating dielectric films in multiple layers is used. In addition, the infrared filter unit may be another optical element such as a mirror.

Note that the infrared filter unit 5A may have a window or an opening without a blocking band in the light receiving sensitivity wavelength band of the infrared camera 4A.

In addition, the infrared filter changing unit 5 may include three or more filters.

The switching structure of the infrared filter unit in the infrared filter changing unit 5 is not limited to the filter wheel, and may be another wavelength band changing structure using a Fabry-Perot structure or the like.

The shutter unit 6 opens and closes the shutter according to a control signal from the control unit 21, shields the visual field B1 of the infrared camera 4A, and shields the visual field B2 of the infrared camera 4B. By opening and closing the shutter, the infrared image captured by the infrared camera 4A can be changed to a luminance image, and the infrared image captured by the infrared camera 4B can be changed to a luminance image. For example, the shutter unit 6 has a high emissivity of infrared light and is constituted by a known material.

The shutter unit 6 may include a temperature sensor. The temperature sensor measures the temperature of the shutter included in the shutter unit 6. For example, information indicating the temperature of the shutter measured by the temperature sensor is included in measurement-related information necessary for temperature measurement and output to the signal processing unit 2.

The shutter unit 6 may be provided in each of the infrared camera 4A and the infrared camera 4B. In addition, the shutter included in the shutter unit 6 may be disposed immediately before the infrared camera 4A and the infrared camera 4B. With such a configuration, there is an advantage that it is not necessary to change the infrared filter unit when performing shutter correction described later.

In addition, the shutter unit 6 may be provided inside camera housings of the infrared camera 4A and the infrared camera 4B. For example, the shutter unit 6 may be disposed between the optical element and the detection element. Thus, there is an advantage that the shutter unit 6 can be manufactured integrally with the camera housing, and the size of the shutter unit 6 itself can be reduced.

The shutter unit 6 may be integrated with the infrared filter changing unit 5, and may have a configuration in which a shielding plate is disposed in a filter wheel, for example. In this case, the number of movable parts can be reduced, which contributes to cost reduction of the movable parts.

The control unit 21 acquires an infrared image and measurement-related information necessary for temperature measurement from the infrared camera 4A and the infrared camera 4B, acquires shutter-related information such as a measurement temperature of a shutter from the shutter unit 6, and performs control related to temperature measurement. The infrared images from the infrared camera 4A and the infrared camera 4B include an infrared image of the shutter when the shutter of the shutter unit 6 is closed, and further include measurement-related information necessary for temperature measurement of the shutter.

For example, the control unit 21 outputs the infrared image and the measurement-related information acquired from the infrared camera 4A and the infrared camera 4B to the luminance calibration unit 23, transmits control information for controlling opening and closing of the shutter to the shutter unit 6, and transmits setting information indicating the light receiving sensitivity wavelength band to the sensitivity wavelength control unit 22.

On the basis of the setting information received from the control unit 21, the sensitivity wavelength control unit 22 transmits a control signal for designating the light receiving sensitivity wavelength band indicated by the setting information to the infrared filter changing unit 5, thereby controlling switching of the infrared filter unit by the infrared filter changing unit 5.

The luminance calibration unit 23 generates a calibration table by using the infrared image of the shutter captured and the measurement-related information necessary for measuring the temperature of the shutter, which are input from the control unit 21. Then, the luminance calibration unit 23 performs luminance calibration of an infrared image in which the object A as the temperature measurement target is captured using the infrared image in which the object as the temperature measurement target is captured and the calibration table read from the memory unit 3.

The luminance calibration of the infrared image is processing of converting each pixel value of the infrared image into the radiance of the object, and a luminance image in which the pixel value of the infrared image is converted into the radiance is generated as a processing result. In the calibration table, luminance calibration parameters necessary for converting each pixel value of the infrared image into the radiance of the object are set. The luminance calibration parameters are data indicating a correspondence relationship between each pixel of an infrared image and radiance of an object at a position corresponding to the pixel.

For example, the luminance calibration unit 23 performs shutter correction to generate the calibration table. The shutter correction is a process of calibrating a change in the correspondence relationship between the radiance of infrared light from an object and a pixel value of an infrared image accompanying a change in environmental temperature and a change in temperature of the infrared camera itself. Specifically, the temperature of the shutter included in the shutter unit 6 is known, and each pixel of the infrared image of the shutter and the radiance indicating the temperature of the shutter at the position corresponding to the pixel are specified using the shutter as a reference target having a known characteristic, and the luminance calibration parameter is obtained. The luminance image generated by the luminance calibration is output from the luminance calibration unit 23 to the matching processing unit 24 and the luminance correcting unit 26.

The matching processing unit 24 performs pixel matching processing on a plurality of luminance images obtained by capturing a common region (same scene) and acquired from the luminance calibration unit 23, and estimates a correspondence relationship of pixels between the luminance images. For example, the luminance calibration unit 23 converts a plurality of infrared images in which the same scene is captured into a plurality of luminance images and outputs the plurality of luminance images to the matching processing unit 24. The matching processing unit 24 estimates a correspondence relationship of pixels between the luminance images acquired from the luminance calibration unit 23.

Note that the luminance image to be subjected to the pixel matching processing is an image based on an infrared image of the same scene captured by the infrared camera 4A and the infrared camera 4B in the same light receiving sensitivity wavelength band. The matching processing unit 24 estimates pixel matching information indicating a correspondence relationship of pixels in the luminance image, stores the estimated pixel matching information in the memory unit 3, and outputs the estimated pixel matching information to the positional relationship estimating unit 25.

The positional relationship estimating unit 25 estimates a positional relationship between the infrared camera 4A and the infrared camera 4B and the object A as a temperature measurement target present in the common region on the basis of the pixel correspondence relationship estimated by the matching processing unit 24. For example, the positional relationship estimating unit 25 reads a correspondence relationship of pixels from the pixel matching information, and reads information regarding installation positions and orientation directions of the infrared camera 4A and the infrared camera 4B from the memory unit 3 from the measurement-related information. Next, the positional relationship estimating unit 25 calculates the distance between each pixel and the infrared camera 4A and the infrared camera 4B using the read information, generates a distance map including the distances to the infrared cameras as pixel values, and stores the generated distance map in the memory unit 3.

The luminance correcting unit 26 is a pixel value correcting unit that corrects a pixel value corresponding to temperature on the basis of the positional relationship between the infrared cameras 4A and 4B and the object A estimated by the positional relationship estimating unit 25.

For example, the luminance correcting unit 26 receives an input of the luminance image from the luminance calibration unit 23, and reads the distance map estimated by the positional relationship estimating unit 25 from the memory unit 3. Then, the luminance correcting unit 26 corrects the radiance of each pixel of the luminance image using the distance map, and outputs the corrected luminance image to the emissivity correcting unit 27.

Even in objects having the same shape at the same temperature, the apparent radiance in the luminance image changes depending on the apparent size viewed from the infrared camera. Thus, the apparent radiance corresponding to the temperature of the object present at the position where the distance to the infrared camera 4A and the distance to the infrared camera 4B are the same differs depending on the apparent size viewed from the infrared camera 4A and the infrared camera 4B.

Further, in the case of an object having the same apparent size as viewed from the infrared camera 4A and the infrared camera 4B, the apparent radiance in the luminance image changes depending on the distance between the object and the infrared camera 4A and the infrared camera 4B. For example, a lookup table predicting a change in apparent radiance in a luminance image according to a distance between the infrared camera and the object and an apparent size of the object is created in advance and stored in the memory unit 3. The luminance correcting unit 26 calculates the true radiance for each pixel in the luminance image by correcting the apparent radiance using the lookup table read from the memory unit 3.

When the size of the object A of the temperature measurement target is known, the luminance correcting unit 26 can calculate the true radiance for each pixel in the luminance image by referring to the lookup table using only the distance information indicating the distance between the infrared camera and the object.

The luminance image in which the luminance of each pixel is corrected is output from the luminance correcting unit 26 to the emissivity correcting unit 27.

The emissivity correcting unit 27 estimates the emissivity of the infrared light of the object A using the pixel correspondence relationship estimated by the matching processing unit 24 and the luminance image whose luminance has been corrected by the luminance correcting unit 26, and generates a temperature image whose pixel value such as luminance has been corrected on the basis of the estimated emissivity.

For example, the emissivity correcting unit 27 acquires a luminance image after luminance correction from the luminance correcting unit 26, and reads, from the memory unit 3, light receiving sensitivity wavelength band information of infrared light when the infrared camera 4A, the infrared camera 4B, the infrared filter unit 5A, the infrared filter unit 5B, and the infrared filter unit 5C are used. Then, the emissivity correcting unit 27 estimates the emissivity of the object A using these pieces of information, and generates a temperature image by multiplying the luminance image after luminance correction by the estimated emissivity.

Although the configuration in which the signal processing unit 2 includes the control unit 21, the sensitivity wavelength control unit 22, the luminance calibration unit 23, the matching processing unit 24, the positional relationship estimating unit 25, the luminance correcting unit 26, and the emissivity correcting unit 27 has been described, the non-contact temperature measurement device 1 only needs to include at least the matching processing unit 24, the positional relationship estimating unit 25, the luminance correcting unit 26, and the emissivity correcting unit 27.

In this case, for example, the infrared camera 4A or the infrared camera 4B includes the control unit 21, the sensitivity wavelength control unit 22, and the luminance calibration unit 23.

Next, a specific operation will be described.

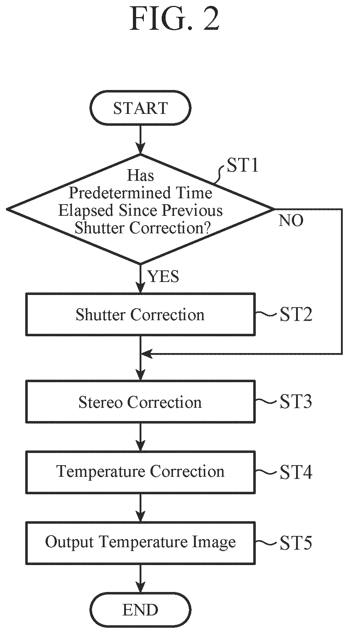

FIG. 2 is a flowchart illustrating the operation of the non-contact temperature measurement device 1, and illustrates a series of processes of temperature measurement by the non-contact temperature measurement device 1.

First, the control unit 21 determines whether or not a predetermined time has elapsed since the previous shutter correction (step ST1). The shutter correction is a process of calibrating a change in correspondence relationship between a radiance of infrared light from an object and a pixel value of an infrared image accompanying a change in environmental temperature and a change in temperature of the infrared camera itself. Here, since it is assumed that the environmental temperature and the temperature of the infrared camera itself do not change in a short time, the time during which at least one of the environmental temperature and the temperature of the infrared camera is expected to change is set as the above-described predetermined time. For example, it is a period of several hours to several days.

If it is determined that the predetermined time has elapsed since the previous shutter correction (step ST1; YES), the control unit 21 outputs instruction information instructing shutter correction to the luminance calibration unit 23. Further, if the predetermined time has not elapsed since the previous shutter correction (step ST1; NO), the control unit 21 does not perform the shutter correction, and outputs instruction information instructing stereo correction to the matching processing unit 24 through the luminance calibration unit 23.

The luminance calibration unit 23 performs shutter correction when the predetermined time has elapsed since the previous shutter correction (step ST2). For example, in accordance with the instruction information acquired from the control unit 21, the luminance calibration unit 23 sets the temperature of the shutter to be known, specifies each pixel of the infrared image (hereinafter referred to as a shutter image) of the shutter and the radiance indicating the temperature of the shutter at the position corresponding to the pixel, and calculates the luminance calibration parameter using the specified information.

Note that the control unit 21 may set conditional branches such as determining occurrence of an event in which a temperature change of the infrared camera itself and a change in environmental temperature cause a change in an output pixel of the infrared camera, and shifting to shutter correction when it is determined that the event has occurred.

In a case where the shutter correction is completed or a predetermined time has not elapsed since the previous shutter correction, the matching processing unit 24 and the positional relationship estimating unit 25 perform stereo correction (step ST3). The stereo correction is processing of performing pixel matching processing on a luminance image based on infrared images captured by the infrared camera 4A and the infrared camera 4B, and calculating a distance between the object A as a temperature measurement target and the infrared camera 4A and the infrared camera 4B for each pixel.

For example, the matching processing unit 24 acquires a plurality of luminance images from the luminance calibration unit 23 and performs pixel matching processing between the acquired luminance images, thereby estimating a correspondence relationship between pixels. The positional relationship estimating unit 25 calculates the distance between the object A as a temperature measurement target and the infrared camera 4A and the infrared camera 4B for each pixel on the basis of the information indicating the correspondence relationship of the pixels estimated by the matching processing unit 24.

Note that, although the case where the distance between the infrared camera and the object is obtained as the positional relationship between the infrared camera and the object has been described, the angle of the object with respect to the infrared camera may be obtained.

Subsequently, the luminance correcting unit 26 and the emissivity correcting unit 27 perform temperature correction on the luminance image for which the stereo correction has been completed (step ST4). The temperature correction is processing of correcting the influence of the distance between the object A and the infrared camera 4A and the infrared camera 4B and the emissivity of infrared light of the object A on the luminance image based on the infrared images captured by the infrared camera 4A and the infrared camera 4B.

For example, the luminance correcting unit 26 reads the distance map estimated by the positional relationship estimating unit 25 from the memory unit 3, and corrects the radiance of each pixel of the luminance image input from the luminance calibration unit 23 using the distance map. The emissivity correcting unit 27 acquires the luminance image after luminance correction acquired from the luminance correcting unit 26, and reads sensitivity wavelength band information when the infrared camera 4A, the infrared camera 4B, the infrared filter unit 5A, the infrared filter unit 5B, and the infrared filter unit 5C are used from the memory unit 3. Next, the emissivity correcting unit 27 estimates the emissivity of the object A using these pieces of information, and generates a temperature image by multiplying the luminance image after luminance correction by the estimated emissivity.

The emissivity correcting unit 27 outputs the temperature image finally obtained by the luminance correcting unit 26 to an external device (not illustrated in FIG. 1) (step ST5). Here, the external device is a device capable of communicating with the non-contact temperature measurement device 1, and may be, for example, a display device capable of displaying a temperature image. Note that the emissivity correcting unit 27 may output the distance information and the emissivity information secondarily generated in the stereo correction or the temperature correction together with the temperature image.

Next, details of the processing of each step of FIG. 2 will be described.

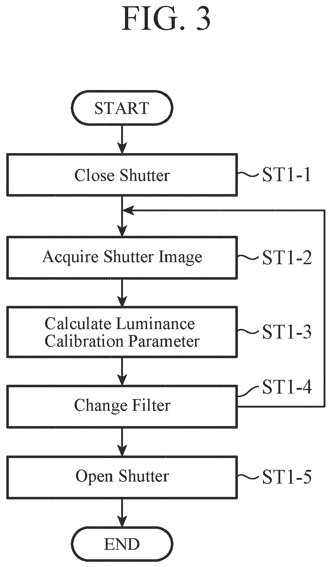

FIG. 3 is a flowchart illustrating a series of processes of shutter correction, and illustrates a series of processes in step ST2 of FIG. 2.

First, the control unit 21 transmits a control signal for closing the shutter to the shutter unit 6. The shutter unit 6 closes the shutter according to the control signal, and shields the visual fields of the infrared camera 4A and the infrared camera 4B (step ST1-1).

Subsequently, the infrared camera 4A and the infrared camera 4B capture a shutter that blocks the visual field B1 and the visual field B2, and generate a shutter image. The control unit 21 acquires a shutter image from the infrared camera 4A and the infrared camera 4B (step ST1-2).

The luminance calibration unit 23 acquires, from the control unit 21, the shutter image, the temperature of the shutter unit 6, and the infrared image obtained by capturing the object A by the infrared camera 4A and the infrared camera 4B in accordance with the instruction information for instructing shutter correction acquired from the control unit 21, and reads, from the memory unit 3, the sensitivity wavelength band information indicating the light receiving sensitivity wavelength bands of the infrared camera 4A and the infrared camera 4B, transmission wavelength band information indicating the transmission wavelength band of the infrared filter unit currently set therein, and the like.

Then, the luminance calibration unit 23 calculates a luminance calibration parameter necessary for converting the pixel value of the infrared image into the radiance of the object A for each pixel of the infrared image by using the information acquired from the control unit 21 and the information read from the memory unit 3 (step ST1-3).

The luminance calibration unit 23 generates a calibration table in which a luminance calibration parameter for each pixel is set, and stores the generated calibration table in the memory unit 3.

Next, the control unit 21 outputs the sensitivity wavelength band information to the sensitivity wavelength control unit 22 to designate a light receiving sensitivity wavelength band. The sensitivity wavelength control unit 22 outputs, to the infrared filter changing unit 5, a control signal for switching to the infrared filter unit that transmits the wavelength band indicated by the sensitivity wavelength band information acquired from the control unit 21. The infrared filter changing unit 5 changes the infrared filter unit set in the visual field B2 of the infrared camera 4B to the infrared filter unit 5B or the infrared filter unit 5C according to the control signal (step ST1-4).

After changing the infrared filter unit, the control unit 21 returns to the processing of step ST1-2 and performs the processing of steps ST1-2 and ST1-3 again. This series of processing is performed on all the infrared filter units included in the infrared filter changing unit 5.

Note that, when the shutter unit 6 is provided between the infrared filter changing unit 5 and the infrared camera 4A and the infrared camera 4B, these processes may be omitted.

When the above-described processing is completed, the control unit 21 transmits a control signal for opening the shutter to the shutter unit 6. The shutter unit 6 opens the shutter according to the control signal, and ends shielding of the visual fields of the infrared camera 4A and the infrared camera 4B (step ST1-5).

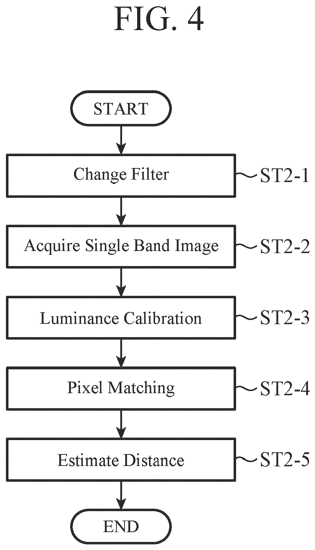

FIG. 4 is a flowchart illustrating a series of processes of the stereo correction, and illustrates a series of processing in step ST3 of FIG. 2.

First, the control unit 21 outputs the sensitivity wavelength band information to the sensitivity wavelength control unit 22 to designate a light receiving sensitivity wavelength band. It is assumed that the infrared camera 4A and the infrared camera 4B have the same light receiving sensitivity wavelength band, and that the infrared filter unit 5A and the infrared filter unit 5B have the same transmission wavelength band.

The control unit 21 outputs the sensitivity wavelength band information that specifies a transmission wavelength band of the infrared filter unit 5B as a sensitivity wavelength to the infrared filter changing unit 5 in such a manner that the infrared camera 4A and the infrared camera 4B have the same light receiving sensitivity wavelength band.

On the basis of the sensitivity wavelength band information acquired from the control unit 21, the sensitivity wavelength control unit 22 outputs a control signal for switching the infrared filter unit to the infrared filter changing unit 5. The infrared filter changing unit 5 changes the infrared filter unit set in the visual field B2 of the infrared camera 4B to the infrared filter unit 5B according to the control signal (step ST2-1).

In a state where the infrared filter unit 5A is set in the infrared camera 4A and the infrared filter unit 5B is set in the infrared camera 4B, the infrared camera 4A captures the visual field B 1, and the infrared camera 4B captures the visual field B2. The control unit 21 acquires infrared images captured by the infrared camera 4A and the infrared camera 4B (step ST2-2). The infrared images acquired by the control unit 21 are images captured by the infrared camera 4A and the infrared camera 4B in the same light receiving sensitivity wavelength band (hereinafter referred to as single-band images).

The control unit 21 outputs the infrared images acquired from the infrared camera 4A and the infrared camera 4B and instruction information for performing luminance calibration for converting these infrared images into luminance images to the luminance calibration unit 23. The luminance calibration unit 23 reads the calibration table from the memory unit 3 in accordance with the instruction information, converts the pixel value of the infrared image into radiance using the luminance calibration parameter corresponding to the same light receiving sensitivity wavelength band included in the calibration table, and generates a luminance image (step ST2-3). The luminance calibration unit 23 outputs the generated luminance image to the matching processing unit 24.

The matching processing unit 24 performs pixel matching processing between a luminance image based on the infrared image captured by the infrared camera 4A and a luminance image based on the infrared image captured by the infrared camera 4B, thereby calculating a correspondence relationship between pixels between the luminance images (step ST2-4).

Since the distribution of the radiance of the infrared light is the same between the luminance images based on the infrared images captured in the same light receiving sensitivity wavelength band by the infrared camera 4A and the infrared camera 4B, the luminance distribution caused by the temperature of the same object A is also the same. Thus, it is easy to specify an object to be matched, and pixel matching between luminance images can be easily performed.

The matching processing unit 24 stores, in the memory unit 3, information indicating a correspondence relationship between pixels obtained by pixel matching.

The positional relationship estimating unit 25 acquires information indicating the correspondence relationship of pixels between the luminance images estimated by the matching processing unit 24 and information indicating the installation positions and orientation directions of the infrared camera 4A and the infrared camera 4B stored in advance in the memory unit 3. Next, the positional relationship estimating unit 25 performs general stereo processing by calculation based on geometric optics using the acquired information, and estimates distances between the object A and the infrared camera 4A and the infrared camera 4B in the luminance image for each pixel (step ST2-5). The distance map indicating the estimated distance for each pixel is stored in the memory unit 3.

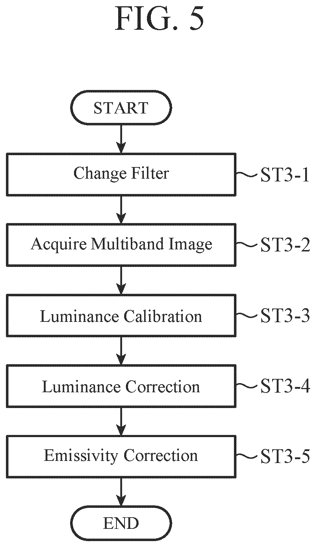

FIG. 5 is a flowchart illustrating a series of processes of temperature correction, and illustrates a series of processes in step ST4 of FIG. 2.

First, the control unit 21 outputs the sensitivity wavelength band information to the sensitivity wavelength control unit 22 to designate a light receiving sensitivity wavelength band. It is assumed that the infrared camera 4A and the infrared camera 4B have the same light receiving sensitivity wavelength band, and that the infrared filter unit 5A and the infrared filter unit 5C have different transmission wavelength bands.

The control unit 21 outputs the sensitivity wavelength band information that specifies a transmission wavelength band of the infrared filter unit 5C as a sensitivity wavelength to the infrared filter changing unit 5 in such a manner that the infrared camera 4A and the infrared camera 4B have different light receiving sensitivity wavelength bands.

On the basis of the sensitivity wavelength band information acquired from the control unit 21, the sensitivity wavelength control unit 22 outputs a control signal for switching the infrared filter unit to the infrared filter changing unit 5. The infrared filter changing unit 5 changes the infrared filter unit set in the visual field B2 of the infrared camera 4B to the infrared filter unit 5C according to the control signal (step ST3-1).

In a state where the infrared filter unit 5A is set in the infrared camera 4A and the infrared filter unit 5C is set in the infrared camera 4B, the infrared camera 4A captures the visual field B 1, and the infrared camera 4B captures the visual field B2. The control unit 21 acquires infrared images captured by the infrared camera 4A and the infrared camera 4B (step ST3-2). The infrared images acquired by the control unit 21 are images captured by the infrared camera 4A and the infrared camera 4B in different light receiving sensitivity wavelength bands (hereinafter referred to as multiband images).

The control unit 21 outputs the infrared images acquired from the infrared camera 4A and the infrared camera 4B and instruction information for performing luminance calibration for converting these infrared images into luminance images to the luminance calibration unit 23. The luminance calibration unit 23 reads out the calibration table from the memory unit 3 in accordance with the instruction information, converts the pixel values of the infrared images into radiance using the luminance calibration parameter corresponding to different light receiving sensitivity wavelength bands included in the calibration table, and generates a luminance image (step ST3-3). The luminance calibration unit 23 outputs the generated luminance image to the luminance correcting unit 26.

Next, the luminance correcting unit 26 corrects the radiance of each pixel of the luminance image acquired from the luminance calibration unit 23 using the distance map read from the memory unit 3 (step ST3-4). As described above, the apparent radiance corresponding to the temperature of the object A present at the position where the distance to the infrared camera 4A and the distance to the infrared camera 4B are the same differs depending on the apparent size of the object A viewed from the infrared camera 4A and the infrared camera 4B.

For example, a lookup table predicting a change in apparent radiance in the luminance image depending on the distance between the infrared camera and the object A and the apparent size of the object A is created in advance and stored in the memory unit 3. The luminance correcting unit 26 corrects the apparent radiance of the object A using the lookup table read from the memory unit 3, thereby calculating the true radiance for each pixel in the luminance image.

When the size of the object A of the temperature measurement target is known, the luminance correcting unit 26 can calculate the true radiance for each pixel in the luminance image by referring to the lookup table using only the distance information indicating the distance between the infrared camera and the object.

The luminance image in which the luminance of each pixel is corrected is output from the luminance correcting unit 26 to the emissivity correcting unit 27.

Further, deconvolution can be used for the luminance correction.

When a spread distribution of the point image of the optical element mounted on each of the infrared camera 4A and the infrared camera 4B is known, the true radiance distribution can be estimated by performing deconvolution on the apparent radiance distribution in the luminance image.

Note that, by using the distance information, it is possible to specify a change in the spread distribution of the point image according to a change in the distance between the object A and the infrared camera 4A and the infrared camera 4B.

Next, the emissivity correcting unit 27 estimates the emissivity of the infrared light of the object A and multiplies the luminance image by the estimated emissivity, thereby generating a temperature image that is a luminance image subjected to luminance correction using the emissivity (step ST3-5).

For example, even if objects exhibit the same radiance, if the emissivities of the objects are different, the objects have different surface temperatures. Therefore, in order to measure the correct surface temperature, it is necessary to correct the radiance using the emissivity.

Accordingly, the emissivity correcting unit 27 estimates the emissivity of the infrared light of the object A using the luminance image after the luminance correction acquired from the luminance correcting unit 26, the correspondence relationship of pixels between the luminance images read from the memory unit 3, and the sensitivity wavelength band information indicating the light receiving sensitivity wavelength bands of the infrared camera 4A and the infrared camera 4B. Then, the emissivity correcting unit 27 multiplies the luminance image after the luminance correction by the luminance correcting unit 26 by the estimated emissivity.

The luminance correction using the emissivity is processing based on the following Expression (1). In the following Expression (1), $L_O$ represents the spectral radiance of the object A, $L_B$ represents the black-body spectral radiance, $T_o$ represents the surface temperature of the object A, and $\rho_o$ represents the emissivity of infrared light of the object A.

$$L_o = \rho_o L_B(T_o, \lambda) \ (1)$$

True radiances $L_1$ and $L_2$ calculated in step ST3-4 of the luminance image based on the infrared image captured by the infrared camera 4A and the infrared camera 4B are expressed by the following Expressions (2) and (3). In the following Expressions (2) and (3), $\eta_1(\lambda)$ is a sensitivity curve in which the transmission wavelength band of the infrared filter unit 5A set in the infrared camera 4A is taken into consideration. $\eta_1(\lambda)$ is a sensitivity wavelength band obtained by taking the transmission wavelength band of the infrared filter unit 5C set in the infrared camera 4B into consideration.

$$L_1 = \int \eta_1(\lambda) L_o d\lambda = \rho_o \int \eta_1(\lambda) L_B(T_o, \lambda) d\lambda \qquad (2)$$

$$L_2 = \int \eta_2(\lambda) L_o d\lambda = \rho_o \int \eta_2(\lambda) L_B(T_o,\lambda) d\lambda \quad (3)$$

In the above Expression (2) and the above Expression (3), To and $\rho_o$ are unknown variables. Since two equations can be established for these unknown variables, it is possible to estimate To and $\rho_o$ by solving these equations as simultaneous equations. By performing this processing on all the pixels in the luminance image, a temperature image can be generated.

In addition, by performing the series of processing illustrated in FIG. 2, the luminance is corrected using the distance between the infrared camera and the object A and the emissivity of the object A, and the surface temperature of the object A can be accurately measured.

The temperature measurement by the non-contact temperature measurement device 1 is characterized in that the infrared camera 4A and the infrared camera 4B change light receiving sensitivity wavelength bands.

In order to estimate the emissivity of the infrared light of the object A, the infrared camera 4A and the infrared camera 4B need to have different light receiving sensitivity wavelength bands.

On the other hand, since luminance images based on infrared images captured in different light receiving sensitivity wavelength bands are greatly different in luminance value and distribution thereof, pixel matching is difficult, and it is difficult to estimate a distance based on a correspondence relationship between pixels.

Accordingly, the non-contact temperature measurement device 1 changes the light receiving sensitivity wavelength bands of the infrared camera 4A and the infrared camera 4B in the distance correction in step ST2 and the temperature correction in step ST3.

For example, in step ST2, pixel matching can be easily performed between luminance images by using infrared images captured in the same light receiving sensitivity wavelength band.

On the other hand, in step ST3, the emissivity can be estimated using infrared images captured in different light receiving sensitivity wavelength bands, and luminance correction using the emissivity can be performed.

Thus, the non-contact temperature measurement device 1 can correct the influence of the emissivity of the infrared light of the object A and the positional relationship between the infrared camera 4A and the infrared camera 4B and the object A on the measured temperature.

Since the non-contact temperature measurement device 1 uses the luminance image based on the infrared image captured in the same light receiving sensitivity wavelength band, it is easy to specify the corresponding luminance distribution between the luminance images, and it is possible to omit a method such as binarization processing of the luminance image or extraction of a contour (common shape) from the luminance image in the pixel matching processing.

Next, a hardware configuration for implementing the function of the non-contact temperature measurement device 1 will be described.

The functions of the control unit 21, the sensitivity wavelength control unit 22, the luminance calibration unit 23, the matching processing unit 24, the positional relationship estimating unit 25, the luminance correcting unit 26, and the emissivity correcting unit 27 included in the non-contact temperature measurement device 1 are implemented by a processing circuit. That is, the non-contact temperature measurement device 1 includes a processing circuit for executing the processing from step ST2-1 to step ST2-5 illustrated in FIG. 4 and the processing from step ST3-1 to step ST3-5 illustrated in FIG. 5. The processing circuit may be dedicated hardware, or may be a central processing unit (CPU) that executes a program stored in a memory.

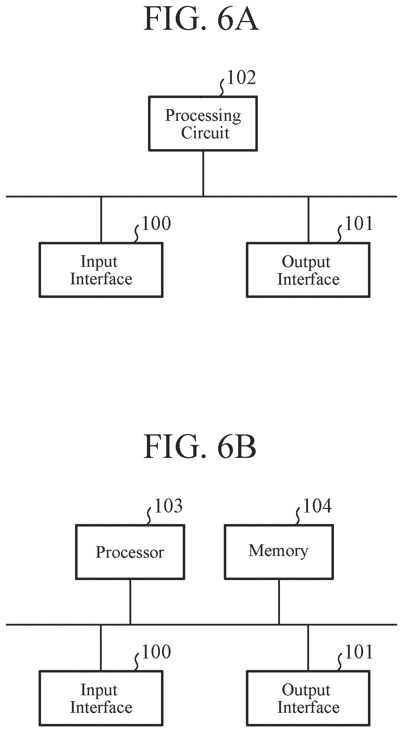

FIG. 6A is a block diagram illustrating a hardware configuration for implementing the functions of the non-contact temperature measurement device 1. FIG. 6B is a block diagram illustrating a hardware configuration for executing software for implementing the functions of the non-contact temperature measurement device 1. In FIGS. 6A and 6B, an input interface 100 is an interface that relays various data stored in the memory unit 3 and relays infrared images acquired from the infrared camera 4A and the infrared camera 4B. An output interface 101 is an interface that relays the control signal output from the sensitivity wavelength control unit 22 to the infrared filter changing unit 5 and the temperature image data output from the emissivity correcting unit 27.

In a case where the processing circuit is a processing circuit 102 that is dedicated hardware illustrated in FIG. 6A, the processing circuit 102 corresponds to, for example, a single circuit, a composite circuit, a programmed processor, a parallel programmed processor, an application specific integrated circuit (ASIC), a fieldprogrammable gate array (FPGA), or a combination thereof.

The functions of the control unit 21, the sensitivity wavelength control unit 22, the luminance calibration unit 23, the matching processing unit 24, the positional relationship estimating unit 25, the luminance correcting unit 26, and the emissivity correcting unit 27 included in the non-contact temperature measurement device 1 may be implemented by separate processing circuits, or these functions may be collectively implemented by one processing circuit.

In a case where the processing circuit is a processor 103 illustrated in FIG. 6B, the functions of the control unit 21, the sensitivity wavelength control unit 22, the luminance calibration unit 23, the matching processing unit 24, the positional relationship estimating unit 25, the luminance correcting unit 26, and the emissivity correcting unit 27 included in the non-contact temperature measurement device 1 are implemented by software, firmware, or a combination of software and firmware. Note that the software or firmware is described as a program and stored in a memory 104.

The processor 103 reads and executes the program stored in the memory 104, thereby implementing the functions of the control unit 21, the sensitivity wavelength control unit 22, the luminance calibration unit 23, the matching processing unit 24, the positional relationship estimating unit 25, the luminance correcting unit 26, and the emissivity correcting unit 27 included in the non-contact temperature measurement device 1.

For example, the non-contact temperature measurement device 1 includes the memory 104 for storing a program that results in execution of the processing from step ST2-1 to step ST2-5 illustrated in FIG. 4 and the processing from step ST3-1 to step ST3-5 illustrated in FIG. 5 when executed by the processor 103.

These programs cause a computer to execute procedures or methods of processing performed by the control unit 21, the sensitivity wavelength control unit 22, the luminance calibration unit 23, the matching processing unit 24, the positional relationship estimating unit 25, the luminance correcting unit 26, and the emissivity correcting unit 27. The memory 104 may be a computer-readable storage medium storing a program for causing a computer to function as the control unit 21, the sensitivity wavelength control unit 22, the luminance calibration unit 23, the matching processing unit 24, the positional relationship estimating unit 25, the luminance correcting unit 26, and the emissivity correcting unit 27.

When an infrared image is input, the processor 103 stores data obtained by temperature measurement using the infrared image in the memory 104, and stores, in the memory 104, a temperature image obtained by performing various corrections on the data stored in the memory 104. Further, the processor 103 reads the temperature image stored in the memory 104 and outputs the temperature image to an external device.

The memory 104 is the memory unit 3 illustrated in FIG. 1, and corresponds to, for example, a random access memory (RAM), a read only memory (ROM), a flash memory, an erasable programmable read only memory (EPROM), an electrically-EPROM (EEPROM) (registered trademark), or the like.

A part of the functions of the control unit 21, the sensitivity wavelength control unit 22, the luminance calibration unit 23, the matching processing unit 24, the positional relationship estimating unit 25, the luminance correcting unit 26, and the emissivity correcting unit 27 included in the non-contact temperature measurement device 1 may be implemented by dedicated hardware, and the other part may be implemented by software or firmware.

For example, the functions of the control unit 21, the sensitivity wavelength control unit 22, and the luminance calibration unit 23 may be implemented by the processing circuit 102 that is dedicated hardware, and the functions of the matching processing unit 24, the positional relationship estimating unit 25, the luminance correcting unit 26, and the emissivity correcting unit 27 may be implemented by the processor 103 reading and executing the program stored in the memory 104. As described above, the processing circuit can implement the above functions by hardware, software, firmware, or a combination thereof.

As described above, the non-contact temperature measurement device 1 according to the first embodiment includes the matching processing unit 24 that estimates a correspondence relationship of pixels between a plurality of images obtained by capturing a visual field including the same scene by the infrared camera 4A and the infrared camera 4B, the positional relationship estimating unit 25 that estimates a positional relationship between the infrared camera 4A and the infrared camera 4B and the object A on the basis of the correspondence relationship of pixels, the luminance correcting unit 26 that corrects luminance corresponding to temperature on the basis of the positional relationship between the infrared camera 4A and the infrared camera 4B and the object A, and the emissivity correcting unit 27 that estimates emissivity of infrared light of the object A using the estimated correspondence relationship of pixels and an image in which the luminance is corrected, and generates an image in which the luminance is corrected based on the estimated emissivity. The matching processing unit 24 estimates a correspondence relationship of pixels between images captured by the infrared camera 4A and the infrared camera 4B in the same light receiving sensitivity wavelength band, and the emissivity correcting unit 27 estimates emissivity of infrared light of the object A by using images captured by the infrared camera 4A and the infrared camera 4B in different light receiving sensitivity wavelength bands.

In the non-contact temperature measurement device 1, the positional relationship between the infrared camera 4A and the infrared camera 4B and the object A can be estimated using the infrared image obtained by capturing the visual field including the same scene, and the emissivity of the infrared light of the object A can be estimated. Thus, the non-contact temperature measurement device 1 can correct the influence of the emissivity of the infrared light of the object A and the positional relationship between the infrared camera 4A and the infrared camera 4B and the object A on the measured temperature.

The non-contact temperature measurement device 1 according to the first embodiment includes the shutter unit 6 that shields the visual fields of the infrared camera 4A and the infrared camera 4B, the infrared filter changing unit 5 that includes the infrared filter units 5A to 5C through which infrared light in different wavelength bands passes, and that switches the infrared filter units 5A to 5C through which infrared light incident on at least one of the infrared camera 4A and the infrared camera 4B passes, the sensitivity wavelength control unit 22 that controls switching of the infrared filter units 5A to 5C, and the luminance calibration unit 23 that converts a plurality of infrared images captured by the infrared camera 4A and the infrared camera 4B into luminance images indicating distribution of luminance values for each pixel corresponding to temperature. The matching processing unit 24 estimates a correspondence relationship of pixels between luminance images.

With this configuration, the non-contact temperature measurement device 1 can estimate the positional relationship between the infrared camera 4A and the infrared camera 4B and the object A using the infrared image obtained by capturing the visual field including the same scene, and can estimate the emissivity of the infrared light of the object A.

In the non-contact temperature measurement device 1 according to the first embodiment, each of the light receiving sensitivity wavelength bands of the infrared camera 4A and the infrared camera 4B is a wavelength band of 8 to 14 $\mu$m, a wavelength band of 3 to 5 $\mu$m, and a wavelength band different from these wavelength bands by a certain wavelength. Accordingly, the non-contact temperature measurement device 1 can measure various temperature ranges.

In the non-contact temperature measurement device 1 according to the first embodiment, the sensitivity wavelength control unit 22 controls switching of the infrared filter units 5A to 5C so as to match the light receiving sensitivity wavelength bands of at least two of the infrared cameras, the infrared camera 4A and the infrared camera 4B. Thus, the non-contact temperature measurement device 1 can estimate a correspondence relationship of pixels between images captured in the same light receiving sensitivity wavelength band.

In the non-contact temperature measurement device 1 according to the first embodiment, the shutter unit 6 is integrated with the infrared filter changing unit 5, and shields the visual field of the infrared camera on which the infrared light having passed through the infrared filter units 5A to 5C switched by the infrared filter changing unit 5 is incident. Thus, the luminance calibration unit 23 can perform shutter correction to generate a calibration table.

In the non-contact temperature measurement device 1 according to the first embodiment, the sensitivity wavelength control unit 22 can change the number of combinations of the light receiving sensitivity wavelength bands of the infrared camera 4A and the infrared camera 4B by at least three or more. Accordingly, the non-contact temperature measurement device 1 can measure various temperature ranges.

In the non-contact temperature measurement method according to the first embodiment, the matching processing unit 24 estimates a correspondence relationship of pixels between a plurality of images obtained by capturing a visual field including the same scene by the infrared camera 4A and the infrared camera 4B, the positional relationship estimating unit 25 estimates a positional relationship between infrared camera 4A and the infrared camera 4B and the object A on the basis of the correspondence relationship of pixels, the luminance correcting unit 26 corrects luminance corresponding to temperature on the basis of the positional relationship between the infrared camera 4A and the infrared camera 4B and the object A, and the emissivity correcting unit 27 estimates emissivity of infrared light of the object A using the estimated correspondence relationship of pixels and an image in which the luminance is corrected, and generates an image in which the luminance is corrected on the basis of the estimated emissivity. The matching processing unit 24 estimates a correspondence relationship of pixels between images captured by the infrared camera 4A and the infrared camera 4B in the same light receiving sensitivity wavelength band, and the emissivity correcting unit 27 estimates emissivity of infrared light of the object A by using images captured by the infrared camera 4A and the infrared camera 4B in different light receiving sensitivity wavelength bands. By executing this method by the non-contact temperature measurement device 1, it is possible to correct the influence of the emissivity of the infrared light of the object A and the positional relationship between the infrared camera 4A and the infrared camera 4B and the object A on the measured temperature.

Second Embodiment

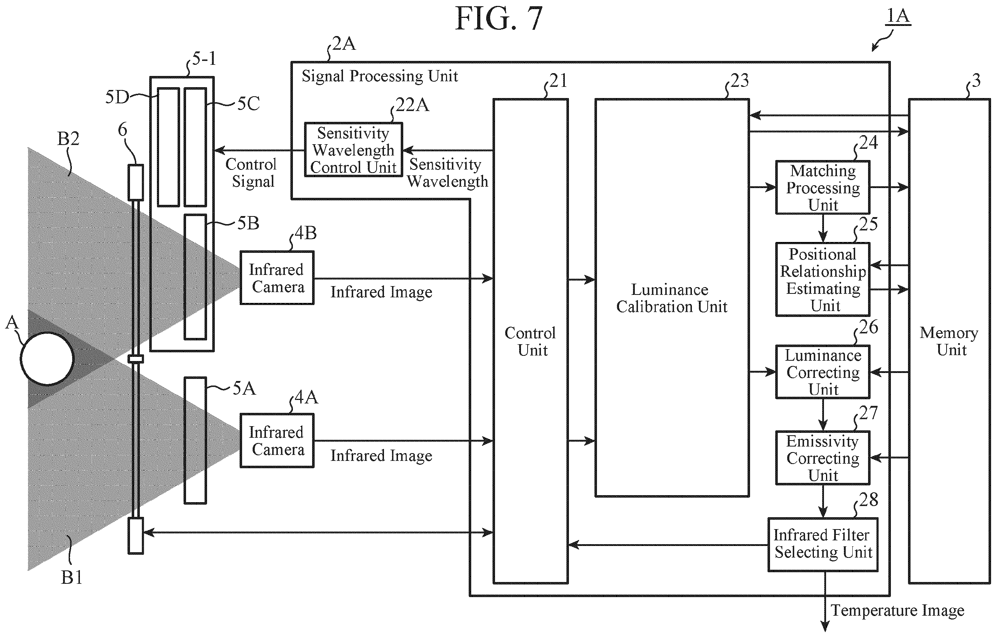

FIG. 7 is a block diagram illustrating a configuration example of a non-contact temperature measurement device 1A according to a second embodiment. In FIG. 7, the non-contact temperature measurement device 1A is a device that measures the temperature of an object A in a non-contact manner using an infrared image obtained by capturing the object A as a temperature measurement target, and includes a signal processing unit 2A, a memory unit 3, an infrared camera 4A, an infrared camera 4B, an infrared filter unit 5A, an infrared filter changing unit 5-1, and a shutter unit 6.

The signal processing unit 2A performs temperature measurement processing of the object A using infrared images captured by the infrared camera 4A and the infrared camera 4B. The signal processing unit 2A includes a control unit 21, a sensitivity wavelength control unit 22, a luminance calibration unit 23, a matching processing unit 24, a positional relationship estimating unit 25, a luminance correcting unit 26, an emissivity correcting unit 27, and an infrared filter selecting unit 28. The infrared filter changing unit 5-1 is a device including an infrared filter unit 5B, an infrared filter unit 5C, and an infrared filter unit 5D and having a function of switching the infrared filter unit.

The infrared filter unit 5A limits a wavelength band of infrared light emitted from an object present in a visual field B1 and incident on the infrared camera 4A. The infrared filter unit 5B, the infrared filter unit 5C, and the infrared filter unit 5D limit a wavelength band of infrared light emitted from an object present in the visual field B2 and incident on the infrared camera 4B. As the infrared filter unit 5A, the infrared filter unit 5B, the infrared filter unit 5C, and the infrared filter unit 5D, for example, a band pass filter configured by laminating dielectric films in multiple layers is used. In addition, the infrared filter unit may be another optical element such as a mirror.

For example, the transmission wavelength bandwidths of the infrared filter unit 5A, the infrared filter unit 5B, the infrared filter unit 5C, and the infrared filter unit 5D are 1 $\mu$m. Further, as an example, a center wavelength of the transmission wavelength band is 9 $\mu$m for the infrared filter unit 5A and the infrared filter unit 5B, 8 $\mu$m for the infrared filter unit 5C, and 10 $\mu$m for the infrared filter unit 5D.

The infrared filter changing unit 5-1 changes a wavelength band of infrared light emitted from an object present in the visual field B2 and incident on the infrared camera 4B by switching the infrared filter unit 5B, the infrared filter unit 5C, and the infrared filter unit 5D. For example, the infrared filter changing unit 5-1 includes a filter wheel and the infrared filter unit 5B, the infrared filter unit 5C, and the infrared filter unit 5D in the filter wheel, and the infrared filter unit 5B, the infrared filter unit 5C, and the infrared filter unit 5D are switched by the rotation of the filter wheel.

At least one of the infrared filter unit 5B, the infrared filter unit 5C, and the infrared filter unit 5D included in the infrared filter changing unit 5-1 has the same transmission wavelength band as the infrared filter unit 5A. In addition, at least one of the infrared filter unit 5B, the infrared filter unit 5C, and the infrared filter unit 5D may have a window or an opening that does not have a blocking band in the light receiving sensitivity wavelength band of the infrared camera 4A and the infrared camera 4B.

In addition, the infrared filter changing unit 5-1 may include three or more filters.

The switching structure of the infrared filter unit in the infrared filter changing unit 5-1 is not limited to the filter wheel, and may be another wavelength band changing structure using a Fabry-Perot structure or the like.

The combination of the transmission wavelength bands of the infrared light set by the change of the infrared filter unit by the infrared filter changing unit 5-1 needs to be at least three types or more.

For example, in the non-contact temperature measurement device 1A, a combination of the center wavelength of the light receiving sensitivity wavelength band of the infrared camera 4A and the center wavelength of the light receiving sensitivity wavelength band of the infrared camera 4B can be set to a total of three types of 9 $\mu$m - 9 $\mu$m, 9 $\mu$m - 8 $\mu$m, and 9 $\mu$m - 10 $\mu$m.

Note that the center wavelength or the transmission bandwidth of the infrared filter unit included in the infrared filter changing unit 5-1 need not be as described above, and the number of the infrared filter units may be changed. For example, the number of the infrared filter units included in the infrared filter changing unit 5-1 may be two, or another infrared filter changing unit including two or more infrared filter units may be newly added to the infrared filter changing unit 5-1.

The infrared filter selecting unit 28 selects a combination of light receiving sensitivity wavelength bands to be used for temperature measurement of the object A by using a luminance image based on an infrared image obtained by capturing visual fields including a common region by the infrared camera 4A and the infrared camera 4B in a combination of two or more light receiving sensitivity wavelength bands, the luminance image in which the radiance of each pixel is corrected by the luminance correcting unit 26 and the emissivity correcting unit 27.

For example, based on the luminance image acquired from the emissivity correcting unit 27, the infrared filter selecting unit 28 determines whether or not the current combination of the infrared filter units is an optimal combination that can improve the accuracy of the measured temperature of the object A. When it is determined that the combination of the infrared filter units is not optimal, the infrared filter selecting unit 28 outputs instruction information for changing the infrared filter unit to the control unit 21, and when it is determined that the combination is optimal, the infrared filter selecting unit 28 directly outputs the luminance image acquired from the emissivity correcting unit 27 as a temperature image.

Although the configuration in which the signal processing unit 2A includes the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28 has been described, the non-contact temperature measurement device 1A only needs to include at least the matching processing unit 24, the positional relationship estimating unit 25, the luminance correcting unit 26, the emissivity correcting unit 27, and the infrared filter selecting unit 28.

In this case, for example, the infrared camera 4A or the infrared camera 4B includes the control unit 21, the sensitivity wavelength control unit 22, and the luminance calibration unit 23.

Next, a specific operation will be described.

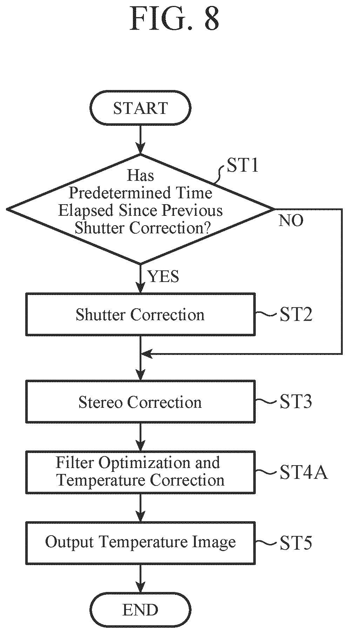

FIG. 8 is a flowchart illustrating the operation of the non-contact temperature measurement device 1A, and illustrates a series of processes of temperature measurement by the non-contact temperature measurement device 1A. In FIG. 8, processing in steps ST1, ST2, ST3, and ST5 is similar to the processing in steps ST1, ST2, ST3, and ST5 in FIG. 2, and thus description thereof is omitted.

The luminance correcting unit 26, the emissivity correcting unit 27, and the infrared filter selecting unit 28 perform filter optimization and temperature correction on the luminance image for which the stereo correction has been completed (step ST4A).

The filter optimization is a process of selecting an optimal combination of the infrared filter units that can improve the accuracy of the measured temperature of the object A. The temperature correction is processing of correcting the influence of the distance between the object A and the infrared camera 4A and the infrared camera 4B and the emissivity of infrared light of the object A on the luminance image based on the infrared images captured by the infrared camera 4A and the infrared camera 4B.

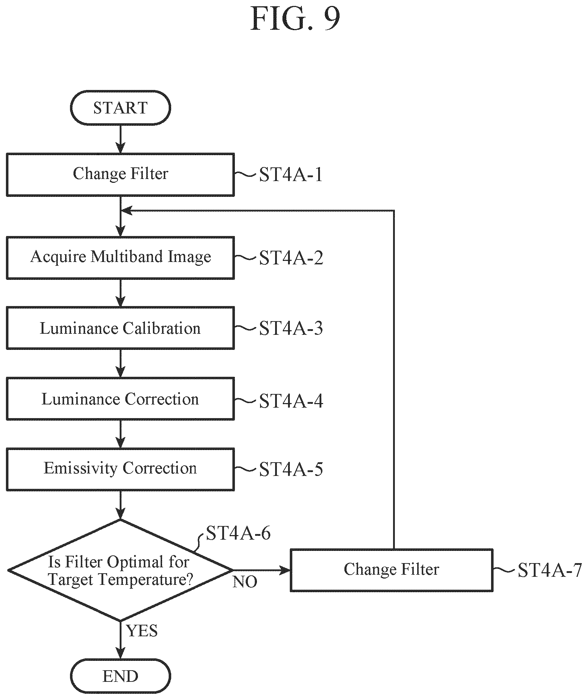

FIG. 9 is a flowchart illustrating a series of processes of filter optimization and temperature correction, and illustrates a series of processes in step ST4A of FIG. 8.

First, the control unit 21 outputs the sensitivity wavelength band information to the sensitivity wavelength control unit 22 to designate a light receiving sensitivity wavelength band. It is assumed that the infrared camera 4A and the infrared camera 4B have the same light receiving sensitivity wavelength band, the infrared filter unit 5A and the infrared filter unit 5B have the same transmission wavelength band (9 $\mu$m - 9 $\mu$m), the infrared filter unit 5A and the infrared filter unit 5C have different transmission wavelength bands (9 $\mu$m - 8 $\mu$m), and the infrared filter unit 5A and the infrared filter unit 5D have different transmission wavelength bands (9 $\mu$m - 10 $\mu$m).

The control unit 21 outputs sensitivity wavelength band information for designating the transmission wavelength band of the infrared filter unit 5C or the infrared filter unit 5D as a sensitivity wavelength to the infrared filter changing unit 5-1 in such a manner that the infrared camera 4A and the infrared camera 4B have different light receiving sensitivity wavelength bands.

On the basis of the sensitivity wavelength band information acquired from the control unit 21, the sensitivity wavelength control unit 22 outputs a control signal for switching the infrared filter unit to the infrared filter changing unit 5. The infrared filter changing unit 5 changes the infrared filter unit set in the visual field B2 of the infrared camera 4B to the infrared filter unit 5C or the infrared filter unit 5D according to the control signal (step ST4A-1).

In a state where the infrared filter unit 5A is set in the infrared camera 4A and the infrared filter unit 5C or the infrared filter unit 5D is set in the infrared camera 4B, the infrared camera 4A captures the visual field B1, and the infrared camera 4B captures the visual field B2. The control unit 21 acquires infrared images captured by the infrared camera 4A and the infrared camera 4B (step ST4A-2). The infrared images acquired by the control unit 21 are multiband images captured by the infrared camera 4A and the infrared camera 4B in different light receiving sensitivity wavelength bands.

The control unit 21 outputs the infrared images acquired from the infrared camera 4A and the infrared camera 4B and instruction information for performing luminance calibration for converting these infrared images into luminance images to the luminance calibration unit 23. The luminance calibration unit 23 reads out the calibration table from the memory unit 3 in accordance with the instruction information, converts the pixel values of the infrared images into radiance using the luminance calibration parameter corresponding to different light receiving sensitivity wavelength bands included in the calibration table, and generates a luminance image (step ST4A-3). The luminance calibration unit 23 outputs the generated luminance image to the luminance correcting unit 26.

The luminance correcting unit 26 corrects the radiance of each pixel of the luminance image acquired from the luminance calibration unit 23 using the distance map read from the memory unit 3 (step ST4A-4). For example, the luminance correcting unit 26 calculates the true radiance for each pixel by correcting the apparent radiance of the object A using the lookup table read from the memory unit 3.

Next, the emissivity correcting unit 27 estimates the emissivity of the infrared light of the object A and multiplies the luminance image by the estimated emissivity, thereby generating a temperature image that is a luminance image subjected to luminance correction using the emissivity (step ST4A-5).

Using the temperature image output from the emissivity correcting unit 27, the infrared filter selecting unit 28 determines whether or not the current combination of the infrared filter unit 5A and the infrared filter unit in the infrared filter changing unit 5-1 is optimization for the current temperature of the object A to be measured (step ST4A-6). When it is determined that the combination of the infrared filter units is optimal (step ST4A-6; YES), the series of processing in FIG. 9 ends.

When it is determined that the combination of the infrared filter units is not optimal (step ST4A-6; NO), the infrared filter selecting unit 28 changes the infrared filter unit set in the infrared filter changing unit 5-1 (step ST4A-7).

It is known that a spectrum shape of a blackbody emission spectrum changes depending on a temperature of an object. In the emissivity correction in step ST4A-5, the infrared camera 4A and the infrared camera 4B having different light receiving sensitivity wavelength bands capture an image of emission light from the object A to estimate a spectrum shape, and the emissivity and the temperature are estimated using the emission spectrum.

In the processing of steps ST4A-6 and ST4A-7, the accuracy of the temperature measurement is enhanced by selecting the optimal combination of light receiving sensitivity wavelength bands of infrared light depending on the temperature of the object A to be measured.

In the emissivity correction, the temperature and the emissivity of the object A are obtained using the radiance of the luminance image based on infrared images each captured by the infrared camera 4A and the infrared camera 4B. Thus, if the radiance in the luminance image is accurately obtained, the estimation accuracy of the temperature and the emissivity of the object A also increases accordingly.

Note that the infrared camera has random noise represented by NETD, and a certain error is superimposed on the measured radiance. Considering this point, the sensitivity wavelength band in which the radiance of the luminance image obtained using the infrared camera 4A and the radiance of the luminance image obtained using the infrared camera 4B are maximized should be selected.

For example, there is a method of setting the sensitivity wavelength bands of the infrared camera 4A and the infrared camera 4B in such a manner as to be symmetric with respect to the peak wavelength. Thus, the radiance of the luminance images obtained using the infrared camera 4A and the infrared camera 4B is substantially maximized, respectively. According to the Wien's displacement law, the peak wavelength $\lambda_p$ of the black-body emission spectrum at the temperature T is obtained by the following Expression (4).

$$\lambda_p \approx (2.898 \times 10^{-3})/T \ (4)$$

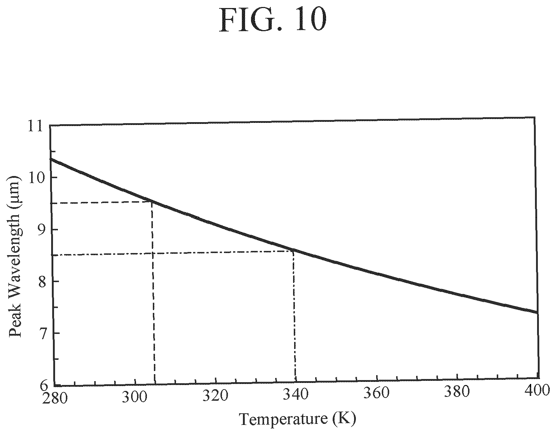

FIG. 10 is a graph illustrating characteristics of the peak wavelength of the black-body emission spectrum, and illustrates the peak wavelength calculated by the above Expression (4). According to the above Expression (4), as illustrated in FIG. 10, when the temperature of the object A to be measured is 305 K, the peak wavelength of the black-body emission spectrum is about 9.5 $\mu$m. Thus, as a combination of the center wavelengths of the infrared filter units, 9 $\mu$m and -10 $\mu$m are optimal. Further, when the temperature of the object A to be measured is 340 K, the peak wavelength is about 8.5 $\mu$m, and thus, 8 $\mu$m - 9 $\mu$m are optimal as a combination of the center wavelengths of the infrared filter units.

The above-described method for setting the center wavelength of the infrared filter is an example, and the characteristics of the infrared filter unit that maximizes the accuracy of temperature measurement and the combination thereof change depending on the transmission bandwidth of the infrared filter unit or the temperature measurement condition assumed.

For example, a lookup table indicating an optimal filter combination for the temperature of the object A to be measured may be prepared, and whether or not the combination of the infrared filter units in step ST4A-6 is optimal may be determined using the lookup table.

The functions of the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28 included in the non-contact temperature measurement device 1A may be implemented by the processing circuit 102 that is dedicated hardware illustrated in FIG. 6A. The processing circuit 102 corresponds to, for example, a single circuit, a composite circuit, a programmed processor, a parallel programmed processor, ASIC, FPGA, or a combination thereof. The functions of the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28 included in the non-contact temperature measurement device 1A may be implemented by separate processing circuits, or these functions may be collectively implemented by one processing circuit.

In a case where the processing circuit is the processor 103 illustrated in FIG. 6B, the functions of the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28 included in the non-contact temperature measurement device 1A are implemented by software, firmware, or a combination of software and firmware. Note that the software or firmware is described as a program and stored in the memory 104.

The processor 103 reads and executes the program stored in the memory 104 to implement the functions of the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28 included in the non-contact temperature measurement device 1A.

For example, the non-contact temperature measurement device 1A includes the memory 104 for storing a program that results in execution of the processing from step ST4A-1 to step ST4A-7 illustrated in FIG. 9 when executed by the processor 103.

These programs cause a computer to execute procedures or methods of processing performed by the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28. The memory 104 may be a computer-readable storage medium storing a program for causing a computer to function as the control unit 21, the sensitivity wavelength control unit 22, the luminance calibration unit 23, the matching processing unit 24, the positional relationship estimating unit 25, the luminance correcting unit 26, the emissivity correcting unit 27, and the infrared filter selecting unit 28.

As described above, the non-contact temperature measurement device 1A according to the second embodiment includes infrared filter selecting unit 28. The infrared filter selecting unit 28 selects a combination of light receiving sensitivity wavelength bands to be used for temperature measurement of the object A by using a luminance image obtained by correcting a luminance value of each pixel by the luminance correcting unit 26 and the emissivity correcting unit 27 in an infrared image obtained by capturing visual fields including the same scene by the infrared camera 4A and the infrared camera 4B with a combination of two or more light receiving sensitivity wavelength bands. The non-contact temperature measurement device 1A can improve the accuracy of temperature measurement by selecting an optimal combination of light receiving sensitivity wavelength bands of infrared light depending on the temperature of the object A to be measured.

Third Embodiment

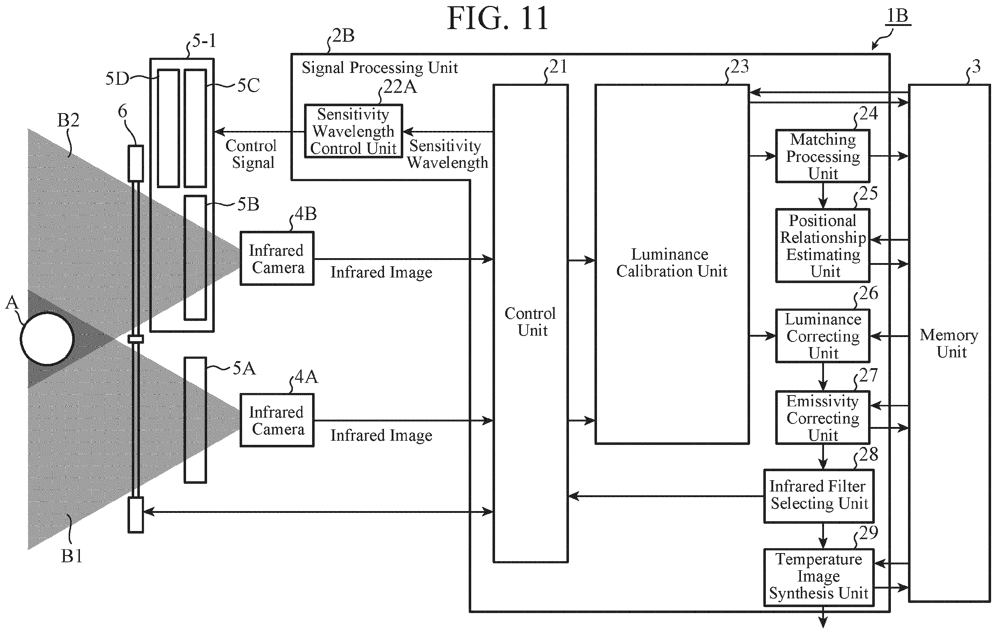

FIG. 11 is a block diagram illustrating a configuration example of a non-contact temperature measurement device 1B according to a third embodiment. In FIG. 11, the non-contact temperature measurement device 1B is a device that measures the temperature of an object A in a non-contact manner using an infrared image obtained by capturing the object A as a temperature measurement target, and includes a signal processing unit 2B, a memory unit 3, an infrared camera 4A, an infrared camera 4B, an infrared filter unit 5A, an infrared filter changing unit 5-1, and a shutter unit 6.

The signal processing unit 2B performs temperature measurement processing of the object A using infrared images captured by the infrared camera 4A and the infrared camera 4B. The signal processing unit 2B includes a control unit 21, a sensitivity wavelength control unit 22, a luminance calibration unit 23, a matching processing unit 24, a positional relationship estimating unit 25, a luminance correcting unit 26, an emissivity correcting unit 27, an infrared filter selecting unit 28, and a temperature image synthesizing unit 29.

The temperature image synthesizing unit 29 is an image synthesizing unit that synthesizes a plurality of luminance images based on infrared images obtained by capturing a visual field including a common region by the infrared camera 4A and the infrared camera 4B in combination of the light receiving sensitivity wavelength bands selected by the infrared filter selecting unit 28, the plurality of luminance images having the radiance of each pixel corrected by the luminance correcting unit 26 and the emissivity correcting unit 27.

For example, the temperature image synthesizing unit 29 acquires a temperature image obtained by a combination of current infrared filter units from the infrared filter selecting unit 28, reads a temperature image obtained by a combination of the infrared filter units different from the current combination from the memory unit 3, and generates an image obtained by synthesizing these temperature images as a temperature image with improved accuracy of the measured temperature.

The configuration in which the signal processing unit 2B includes the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29 has been described, but the non-contact temperature measurement device 1B only needs to include at least the matching processing unit 24, the positional relationship estimating unit 25, the luminance correcting unit 26, the emissivity correcting unit 27, the infrared filter selecting unit 28, and the temperature image synthesizing unit 29.

In this case, for example, the infrared camera 4A or the infrared camera 4B includes the control unit 21, the sensitivity wavelength control unit 22, and the luminance calibration unit 23.

Next, a specific operation will be described.

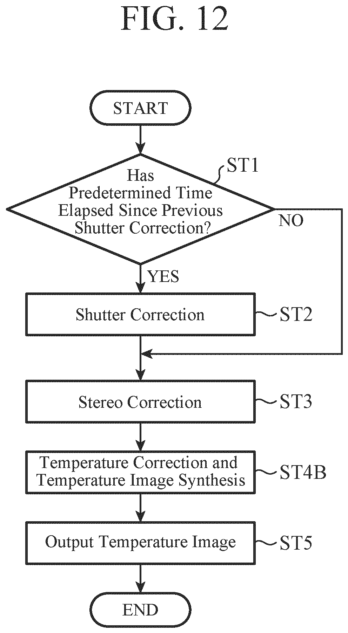

FIG. 12 is a flowchart illustrating the operation of the non-contact temperature measurement device 1B, and illustrates a series of processes of temperature measurement by the non-contact temperature measurement device 1B. In FIG. 12, processing in steps ST1, ST2, ST3, and ST5 is similar to the processing in steps ST1, ST2, ST3, and ST5 in FIG. 2, and thus description thereof is omitted.

The luminance correcting unit 26, the emissivity correcting unit 27, and the temperature image synthesizing unit 29 perform temperature correction and temperature image synthesis on the luminance image for which the stereo correction has been completed (step ST4B).

The temperature image synthesis is a process of synthesizing temperature images acquired by a combination of the plurality of infrared filter units. The temperature correction is processing of correcting the influence of the distance between the object A and the infrared camera 4A and the infrared camera 4B and the emissivity of infrared light of the object A on the luminance image based on the infrared images captured by the infrared camera 4A and the infrared camera 4B.

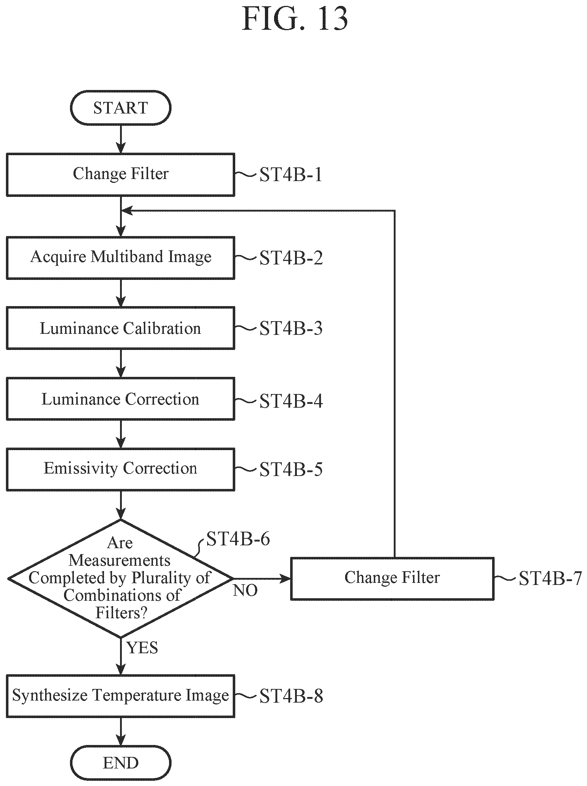

FIG. 13 is a flowchart illustrating a series of processes of temperature correction and temperature image synthesis, and illustrates a series of processes in step ST4B of FIG. 12.

The control unit 21 outputs sensitivity wavelength band information for designating the transmission wavelength band of the infrared filter unit 5C or the infrared filter unit 5D as a sensitivity wavelength to the infrared filter changing unit 5-1 in such a manner that the infrared camera 4A and the infrared camera 4B have different light receiving sensitivity wavelength bands.

On the basis of the sensitivity wavelength band information acquired from the control unit 21, the sensitivity wavelength control unit 22 outputs a control signal for switching the infrared filter unit to the infrared filter changing unit 5. The infrared filter changing unit 5 changes the infrared filter unit set in the visual field B2 of the infrared camera 4B to the infrared filter unit 5C or the infrared filter unit 5D according to the control signal (step ST4B-1).

In a state where the infrared filter unit 5A is set in the infrared camera 4A and the infrared filter unit 5C or the infrared filter unit 5D is set in the infrared camera 4B, the infrared camera 4A captures the visual field B 1, and the infrared camera 4B captures the visual field B2. The control unit 21 acquires infrared images captured by the infrared camera 4A and the infrared camera 4B (step ST4B-2). The infrared images acquired by the control unit 21 are multiband images captured by the infrared camera 4A and the infrared camera 4B in different light receiving sensitivity wavelength bands.

The control unit 21 outputs the infrared images acquired from the infrared camera 4A and the infrared camera 4B and instruction information for performing luminance calibration for converting these infrared images into luminance images to the luminance calibration unit 23. The luminance calibration unit 23 reads out the calibration table from the memory unit 3 in accordance with the instruction information, converts the pixel values of the infrared images into radiance using the luminance calibration parameter corresponding to different light receiving sensitivity wavelength bands included in the calibration table, and generates a luminance image (step ST4B-3). The luminance calibration unit 23 outputs the generated luminance image to the luminance correcting unit 26.

The luminance correcting unit 26 corrects the radiance of each pixel of the luminance image acquired from the luminance calibration unit 23 using the distance map read from the memory unit 3 (step ST4B-4). For example, the luminance correcting unit 26 calculates the true radiance for each pixel by correcting the apparent radiance of the object A using the lookup table read from the memory unit 3.

Next, the emissivity correcting unit 27 estimates the emissivity of the infrared light of the object A and multiplies the luminance image by the estimated emissivity, thereby generating a temperature image that is a luminance image subjected to luminance correction using the emissivity (step ST4B-5).

The temperature image synthesizing unit 29 determines whether or not the temperature of the object A is measured by a plurality of combinations of infrared filter units (step ST4B-6). Here, when it is determined that the temperature of the object A is not measured by a plurality of combinations of infrared filter units (step ST4B-6; NO), the infrared filter selecting unit 28 changes the infrared filter unit set in the infrared filter changing unit 5-1 (step ST4B-7). A series of processes from step ST4B-2 is repeated with the changed combination of the infrared filter units.

When it is determined that the temperature of the object A is measured by a plurality of combinations of infrared filter units (step ST4B-6; YES), the temperature image synthesizing unit 29 synthesizes a plurality of temperature images acquired by a plurality of combinations of infrared filter units to generate a temperature image having high measurement accuracy in the entire image (step ST4B-8).

In the second embodiment, by changing the combination of the infrared filter units depending on the temperature of the object A to be measured, measurement is performed in a sensitivity wavelength band optimal for the temperature, and the temperature measurement accuracy is improved. However, in this method, when there are objects having significantly different temperatures in the image, the combination of the infrared filter units can be optimized only in one of the objects.

On the other hand, in the temperature image synthesis in step ST4B-8, a plurality of temperature images acquired by a combination of a plurality of infrared filter units is synthesized. For example, a predetermined temperature threshold is set, and a temperature value acquired by the combination (1) of the infrared filter units is adopted in the pixels equal to or less than the predetermined temperature threshold, and a temperature value acquired by the combination (2) of the infrared filter units is adopted in the pixels equal to or more than the predetermined threshold, and are synthesized as one image. Thus, the non-contact temperature measurement device 1B can set an optimal combination of infrared filter units for each pixel, and the accuracy of temperature measurement is improved in the entire image. Note that two or more of the above threshold values may be set.

The functions of the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29 included in the non-contact temperature measurement device 1B may be implemented by the processing circuit 102 that is dedicated hardware illustrated in FIG. 6A.

The processing circuit 102 corresponds to, for example, a single circuit, a composite circuit, a programmed processor, a parallel programmed processor, ASIC, FPGA, or a combination thereof. The functions of the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29 included in the non-contact temperature measurement device 1B may be implemented by separate processing circuits, or these functions may be collectively implemented by one processing circuit.

In a case where the processing circuit is the processor 103 illustrated in FIG. 6B, the functions of the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29 included in the non-contact temperature measurement device 1B are implemented by software, firmware, or a combination of software and firmware. Note that the software or firmware is described as a program and stored in the memory 104.

The processor 103 reads and executes the program stored in the memory 104 to implement the functions of the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29 included in the non-contact temperature measurement device 1B.

For example, the information processing device 1B includes the memory 104 for storing a program that results in execution of the processing of steps ST4B-1 to ST4B-8 illustrated in FIG. 13 when executed by the processor 103.

These programs cause a computer to execute procedures or methods of processing performed by the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29.

The memory 104 may be a computer-readable storage medium storing a program for causing a computer to function as the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29.

As described above, the non-contact temperature measurement device 1B according to the third embodiment includes the temperature image synthesizing unit 29. The temperature image synthesizing unit 29 synthesizes a plurality of images obtained by correcting, by the luminance correcting unit 26 and the emissivity correcting unit 27, luminance for each pixel in a plurality of infrared images obtained by capturing visual fields including the same scene by the infrared camera 4A and the infrared camera 4B in combination of the light receiving sensitivity wavelength bands selected by the infrared filter selecting unit 28.

Thus, the non-contact temperature measurement device 1B can set an optimal combination of infrared filter units for each pixel, and can improve the temperature measurement accuracy in the entire image.

Fourth Embodiment

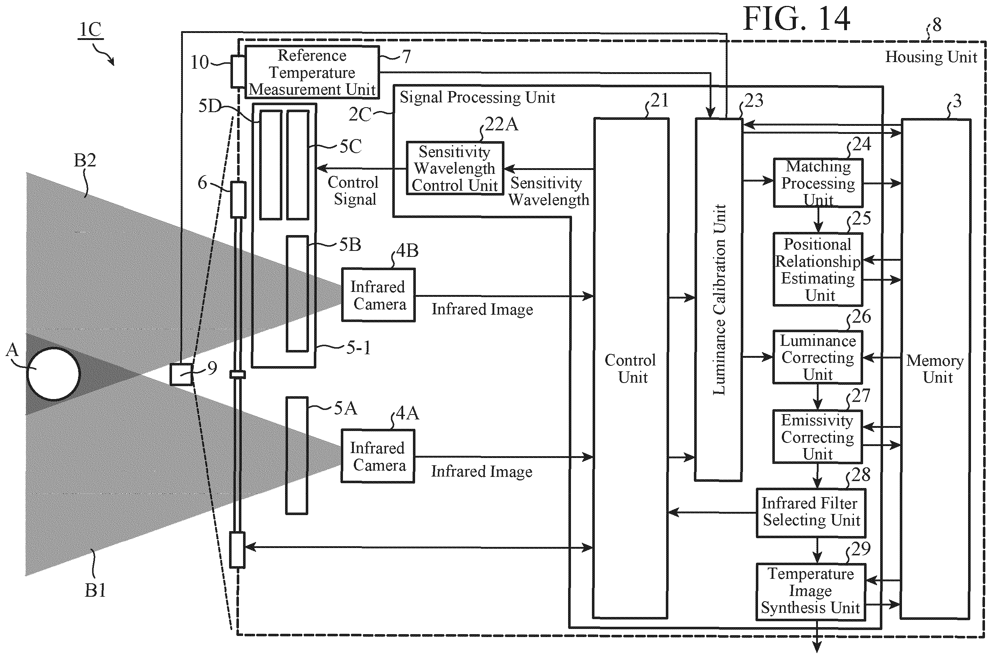

FIG. 14 is a block diagram illustrating a configuration example of a non-contact temperature measurement device 1C according to a fourth embodiment. In FIG. 14, the non-contact temperature measurement device 1C is a device that measures the temperature of an object A in a non-contact manner using an infrared image obtained by capturing the object A as a temperature measurement target, and includes a signal processing unit 2C, a memory unit 3, an infrared camera 4A, an infrared camera 4B, an infrared filter unit 5A, an infrared filter changing unit 5-1, a shutter unit 6, a reference temperature measurement unit 7, a housing 8, a shutter luminance measuring infrared camera 9, and a reference target 10.

The signal processing unit 2C performs temperature measurement processing of the object A using infrared images captured by the infrared camera 4A and the infrared camera 4B. The signal processing unit 2C includes a control unit 21, a sensitivity wavelength control unit 22A, a luminance calibration unit 23, a matching processing unit 24, a positional relationship estimating unit 25, a luminance correcting unit 26, an emissivity correcting unit 27, an infrared filter selecting unit 28, and a temperature image synthesizing unit 29.

The reference temperature measurement unit 7 measures the temperature of the reference target 10 provided separately from the object A as a temperature measurement target. For example, the reference temperature measurement unit 7 is a contact-type temperature sensor installed in the vicinity of the reference target 10, measures the temperature of the reference target 10, and outputs the measured temperature to the luminance calibration unit 23. As the temperature sensor, for example, a thermistor or a thermocouple may be used.

The housing 8 houses the signal processing unit 2C, the memory unit 3, the infrared camera 4A, the infrared camera 4B, the infrared filter unit 5A, the infrared filter changing unit 5-1, the shutter unit 6, the reference temperature measurement unit 7, the housing 8, the shutter luminance measuring infrared camera 9, and the reference target 10 therein. The reference target 10 is held on the surface of the housing 8.

Note that the housing 8 may be divided. For example, the signal processing unit 2C, the infrared camera 4A, and the infrared camera 4B may separately include housings.

The shutter luminance measuring infrared camera 9 captures an infrared image of the shutter of the shutter unit 6 arranged on the front surfaces of the infrared camera 4A and the infrared camera 4B, and captures an infrared image of the reference target 10 provided on the surface of the housing 8. The shutter luminance measuring infrared camera 9 outputs the captured infrared image to the luminance calibration unit 23.

Further, the shutter luminance measuring infrared camera 9 includes, for example, a single infrared camera separate from the infrared camera 4A and the infrared camera 4B. The shutter luminance measuring infrared camera 9 is installed outside the range of the visual field B1 and the visual field B2 so as not to be photographed by the infrared camera 4A and the infrared camera 4B. The shutter luminance measuring infrared camera 9 has a visual field at least twice or more the visual fields of the infrared camera 4A and the infrared camera 4B in order to put the two shutters included in the shutter unit 6 and the reference target 10 into the visual field from the installation position.

Note that the shutter luminance measuring infrared camera 9 may be provided independently of the housing 8, or may be supported by the housing 8 using a plate-like structure or the like.

The configuration in which the signal processing unit 2C includes the control unit 21, the sensitivity wavelength control unit 22, the luminance calibration unit 23, the matching processing unit 24, the positional relationship estimating unit 25, the luminance correcting unit 26, the emissivity correcting unit 27, the infrared filter selecting unit 28, and the temperature image synthesizing unit 29 has been described, but the non-contact temperature measurement device 1C only needs to include at least the matching processing unit 24, the positional relationship estimating unit 25, the luminance correcting unit 26, the emissivity correcting unit 27, the infrared filter selecting unit 28, and the temperature image synthesizing unit 29.

In this case, for example, the infrared camera 4A or the infrared camera 4B includes the control unit 21, the sensitivity wavelength control unit 22, and the luminance calibration unit 23.

Next, a specific operation will be described.

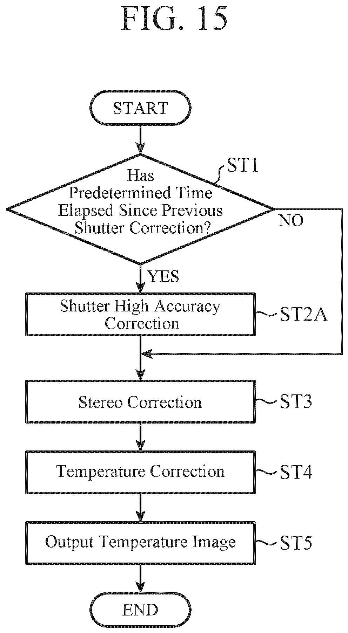

FIG. 15 is a flowchart illustrating the operation of the non-contact temperature measurement device 1C, and illustrates a series of processes of temperature measurement by the non-contact temperature measurement device 1C. In FIG. 15, processing in steps ST1, ST3, ST4, and ST5 is similar to the processing in steps ST1, ST3, ST4, and ST5 in FIG. 2, and thus description thereof is omitted.

When a predetermined time elapses since the previous shutter correction, the signal processing unit 2C performs shutter high accuracy correction (step ST2A). In the shutter high accuracy correction, the temperature of the shutter and the temperature of the reference target 10 are measured using the luminance image of the shutter of the shutter unit 6 and the luminance image of the reference target 10, and the radiance of the luminance image according to the temperature of the shutter is estimated with high accuracy using the temperature of the reference target 10 measured by the reference temperature measurement unit 7 as a known value.

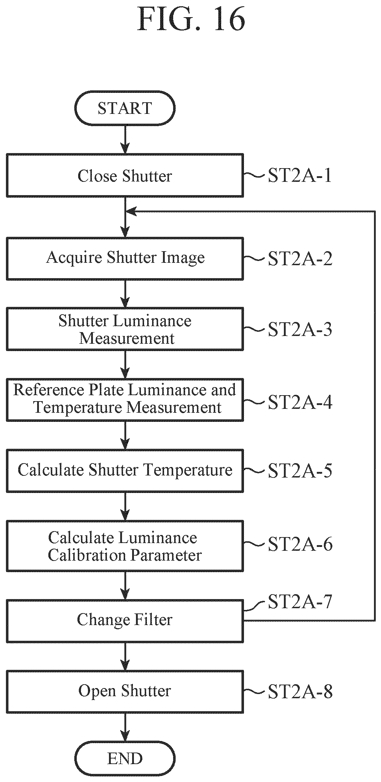

FIG. 16 is a flowchart illustrating a series of processes of shutter high accuracy correction, and illustrates a series of processes in step ST2A of FIG. 15.

First, the control unit 21 transmits a control signal for closing the shutter to the shutter unit 6. The shutter unit 6 closes the shutter according to the control signal, and shields the visual fields of the infrared camera 4A and the infrared camera 4B (step ST2A-1).

Subsequently, the infrared camera 4A and the infrared camera 4B capture a shutter that blocks the visual field B1 and the visual field B2, and generate shutter images. The control unit 21 acquires the shutter images from the infrared camera 4A and the infrared camera 4B (step ST2A-2).

The shutter luminance measurement in step ST2A-3 is processing in which the luminance calibration unit 23 converts the infrared images of the two shutters included in the shutter unit 6 captured by the shutter luminance measuring infrared camera 9 into luminance images.

Next, reference plate luminance and temperature measurement in step ST2A-4 is processing in which the luminance calibration unit 23 converts the infrared image of the reference target 10 captured by the shutter luminance measuring infrared camera 9 into a luminance image, and the reference temperature measurement unit 7 measures the temperature of the reference target 10.

The luminance calibration unit 23 converts the radiance in the shutter image into a temperature by using the luminance image of the shutter, the luminance image of the reference target 10, and the measured temperature of the reference target 10 (step ST2A-5).

Next, the luminance calibration unit 23 acquires, from the control unit 21, an infrared image obtained by the infrared camera 4A and the infrared camera 4B capturing an image of the object A, and reads, from the memory unit 3, sensitivity wavelength band information indicating light receiving sensitivity wavelength bands of the infrared camera 4A and the infrared camera 4B, transmission wavelength band information indicating a transmission wavelength band of the infrared filter unit currently set thereto, and the like.

Then, using the information acquired from the control unit 21 and the information read from the memory unit 3, the luminance calibration unit 23 calculates a luminance calibration parameter necessary for converting the pixel value of the infrared image into the radiance of the object A for each pixel of the infrared image (step ST2A-6).

The luminance calibration unit 23 generates a calibration table in which a luminance calibration parameter for each pixel is set, and stores the generated calibration table in the memory unit 3.

Next, the control unit 21 outputs the sensitivity wavelength band information to the sensitivity wavelength control unit 22 to designate a light receiving sensitivity wavelength band. The sensitivity wavelength control unit 22 outputs, to the infrared filter changing unit 5, a control signal for switching to the infrared filter unit that transmits the wavelength band indicated by the sensitivity wavelength band information acquired from the control unit 21. The infrared filter changing unit 5-1 changes the infrared filter unit set in the visual field B2 of the infrared camera 4B to the infrared filter unit 5B or the infrared filter unit 5C according to the control signal (step ST2A-7).

After changing the infrared filter unit, the control unit 21 returns to the processing of step ST2A-2 and performs the processing of steps ST2A-2 and ST2A-6 again. This series of processing is performed on all the infrared filter units included in the infrared filter changing unit 5-1.

When the above-described processing is completed, the control unit 21 transmits a control signal for opening the shutter to the shutter unit 6. The shutter unit 6 opens the shutter according to the control signal, and ends shielding of the visual fields of the infrared camera 4A and the infrared camera 4B (step ST2A-8).

The shutter correction in step ST2A-1 is generally used in the infrared camera. Even when the temperature of the object A to be measured is constant, the apparent temperature (luminance) varies depending on the temperature change of the infrared camera itself. Thus, the measured pixel value is associated with the radiance value of the measurement target by measuring the luminance of the shutter whose temperature can be considered to be known. At this time, although the shutter temperature needs to be known, the shutter temperature is usually estimated by using a measurement value of a contact type temperature sensor provided in the shutter or by approximating the measurement value to be substantially equivalent to the room temperature.

On the other hand, since the shutter used for correction is a component that opens and closes, the temperature sensor cannot be brought into contact with the shutter itself, and the temperature that can be measured is limited to the temperature around the shutter. Thus, the measurement value by the contact type temperature sensor is not the temperature of the shutter itself.

The shutter temperature is affected by a complex environmental temperature including heat generation of the infrared camera itself, and thus does not necessarily coincide with the room temperature. In addition, the temperature distribution of the shutter cannot be considered.

On the other hand, the non-contact temperature measurement device 1C estimates the temperature and the emissivity by combining the luminance values measured by the plurality of infrared cameras. At this time, since various calculations are applied to the temperature measurement values using the respective infrared cameras, if there is an error in these measurement values, errors in the output measured temperature and emissivity also increase. Accordingly, the infrared camera is used as a means for measuring the shutter temperature with higher accuracy than in the case of using the infrared camera for general purposes.

Note that a single infrared camera may be used as the shutter luminance measuring infrared camera 9. In this case, errors due to individual differences of the infrared camera can be eliminated, and the temperature of the shutter can be measured with higher accuracy.

Further, a high-resolution infrared camera may be employed as the shutter luminance measuring infrared camera 9. In this case, the two-dimensional temperature distribution of the shutter can be acquired, and the infrared camera 4A and the infrared camera 4B can be calibrated with higher accuracy.

As described above, the non-contact temperature measurement device 1C according to the fourth embodiment includes the reference temperature measurement unit 7 that measures the temperature of the reference target 10 provided separately from the object A as a temperature measurement target.

Using the infrared image including the reference target 10 and the shutter unit 6 captured by the shutter luminance measuring infrared camera 9, the luminance calibration unit 23 generates a luminance image indicating distribution of luminance values for each pixel corresponding to the temperature of the reference target 10 and the shutter unit 6. The luminance correcting unit 26 corrects the luminance image of the shutter unit 6 using the correspondence relationship between the luminance image of the reference target 10 and the temperature measurement value of the reference target 10, and corrects the luminance image of the object A using the corrected luminance image of the shutter unit 6. Thus, in the non-contact temperature measurement device 1C, the luminance calibration accuracy in each infrared camera is improved, and as a result, the temperature measurement accuracy to be measured is improved.

Note that combinations of the individual embodiments, modifications of any components of the individual embodiments, or omissions of any components in the individual embodiments are possible.

## INDUSTRIAL APPLICABILITY

A non-contact temperature measurement device according to the present disclosure can be used, for example, for remotely monitoring a person with a fever.

## REFERENCE SIGNS LIST

1, 1A to 1C: non-contact temperature measurement device, 2, 2A to 2C: signal processing unit, 3: memory unit, 4A, 4B: infrared camera, 5, 5-1, 5A to 5D: infrared filter changing unit, 6: shutter unit, 7: reference temperature measurement unit, 8: housing, 9: shutter luminance measuring infrared camera, 10: reference target, 21: control unit, 22, 22A: sensitivity wavelength control unit, 23: luminance calibration unit, 24: matching processing unit, 25: positional relationship estimating unit, 26: luminance correcting unit, 27: emissivity correcting unit, 28: infrared filter selecting unit, 29: temperature image synthesizing unit, 100: input interface, 101: output interface, 102: processing circuit, 103: processor, 104: memory

## Claims

**1.** A non-contact temperature measurement device comprising:

a matching processing unit to estimate a correspondence relationship of pixels between a plurality of images obtained by capturing visual fields by a plurality of infrared cameras, respectively, the visual fields including a common region;

a positional relationship estimating unit to estimate a positional relationship between the infrared cameras and an object as a temperature measurement target which is present in the common region on a basis of the estimated correspondence relationship of the pixels;

a pixel value correcting unit to perform correction of a pixel value corresponding to a temperature on a basis of the estimated positional relationship between the infrared cameras and the object; and

an emissivity correcting unit to estimate emissivity of infrared light of the object using the estimated correspondence relationship of the pixels and an image obtained by the correction of the pixel value, and perform generation of an image after the correction of the pixel value is performed on a basis of the estimated emissivity, wherein

the matching processing unit estimates the correspondence relationship of the pixels between the plurality of images obtained by capturing the visual fields including the common region by the plurality of the infrared cameras in a same light receiving sensitivity wavelength band, and

the emissivity correcting unit estimates the emissivity of infrared light of the object by using the images obtained by capturing the visual fields including the common region by the plurality of the infrared cameras in light receiving sensitivity wavelength bands different from each other, respectively.

2. The non-contact temperature measurement device according to claim 1, further comprising:

a shutter unit to shield the visual fields of the plurality of the infrared cameras;

an infrared filter changing unit including a plurality of infrared filter units through which beams of infrared light in different wavelength bands pass, and to perform switching of an infrared filter unit among the plurality of infrared filter units that allows infrared light incident on at least one of the plurality of the infrared cameras to pass;

a sensitivity wavelength control unit to control the switching of the plurality of infrared filter units; and

a luminance calibration unit to convert the plurality of infrared images captured by the plurality of the infrared cameras into luminance images indicating distribution of respective luminance values of the pixels corresponding to temperatures, wherein

the matching processing unit estimates the correspondence relationship of the pixels between the luminance images.

3. The non-contact temperature measurement device according to claim 2, wherein each of the light receiving sensitivity wavelength bands of the plurality of infrared cameras is at least one of a wavelength band of 8 to 14 micrometers, a wavelength band of 3 to 5 micrometers, a wavelength band different from the wavelength band of 8 to 14 micrometers by a certain wavelength, and a wavelength band different from the wavelength band of 3 to 5 micrometers by a certain wavelength.

4. The non-contact temperature measurement device according to claim 3, wherein the sensitivity wavelength control unit controls the switching of the plurality of infrared filter units by the infrared filter changing unit to match the light receiving sensitivity wavelength bands of at least two infrared cameras of the plurality of the infrared cameras each other.

5. The non-contact temperature measurement device according to claim 4, wherein the shutter unit is configured integrally with the infrared filter changing unit, and shields a visual field of an infrared camera on which the infrared light having passed through the infrared filter unit selected by the switching by the infrared filter changing unit is incident.

6. The non-contact temperature measurement device according to claim 4, wherein the sensitivity wavelength control unit is capable of changing a number of combinations of the light receiving sensitivity wavelength bands of the plurality of the infrared cameras by at least three or more.

7. The non-contact temperature measurement device according to claim 6, further comprising: an infrared filter selecting unit to select a combination of the light receiving sensitivity wavelength bands to be used for temperature measurement of the object using an image obtained by correcting the pixel value in an infrared image obtained by capturing the visual fields including the common region by a plurality of the infrared cameras with a combination of two or more light receiving sensitivity wavelength bands by the pixel value correcting unit and the emissivity correcting unit.

8. The non-contact temperature measurement device according to claim 7, further comprising: an image synthesizing unit to synthesize a plurality of images obtained by correcting the pixel value in a plurality of infrared images obtained by capturing the visual fields including the common region by the plurality of the infrared cameras using the combination of the light receiving sensitivity wavelength bands, selected by the infrared filter selecting unit, by the pixel value correcting unit and the emissivity correcting unit.

9. The non-contact temperature measurement device according to claim 6, further comprising: a reference temperature measurement unit to perform measurement of a temperature of a reference target provided separately from the object as a temperature measurement target, wherein

the luminance calibration unit generates a luminance image indicating distribution of respective luminance values of the pixels corresponding to temperatures of the reference target and the shutter unit by using an infrared image including the reference target and the shutter unit captured by a shutter luminance measuring infrared camera provided separately from the plurality of the infrared cameras, and
the pixel value correcting unit corrects the luminance image of the shutter unit by using a correspondence relationship between the luminance image of the reference target and a temperature value of the reference target obtained by the measurement, and corrects the luminance image of the object by using the corrected luminance image of the shutter unit.

10. A non-contact temperature measurement method performed by a non-contact temperature measurement device, the method comprising the steps of:

estimating, by a matching processing unit, a correspondence relationship of pixels between a plurality of images obtained by capturing visual fields by a plurality of infrared cameras, respectively, the visual fields including a common region;
estimating, by a positional relationship estimating unit, a positional relationship between the infrared cameras and an object as a temperature measurement target which is present in the common region on a basis of the estimated correspondence relationship of the pixels;
performing, by a pixel value correcting unit, correction of a pixel value corresponding to a temperature on a basis of the estimated positional relationship between the infrared cameras and the object; and

estimating, by an emissivity correcting unit, emissivity of infrared light of the object using the estimated correspondence relationship of the pixels and an image obtained by the correction of the pixel value, and performing generation of an image after the correction of the pixel value is performed on a basis of the estimated emissivity, wherein
the matching processing unit estimates the correspondence relationship of the pixels between the plurality of images obtained by capturing the visual fields including the common region by the plurality of the infrared cameras in a same light receiving sensitivity wavelength band, and
the emissivity correcting unit estimates the emissivity of infrared light of the object by using the images obtained by capturing the visual fields including the common region by the plurality of the infrared cameras in light receiving sensitivity wavelength bands different from each other, respectively.

FIG. 1

# FIG. 2

```
                    ┌─────────────┐
                    │    START    │
                    └─────────────┘
                           │
                           ▼
                          ╱ ╲
                         ╱   ╲        ⌐ST1
                        ╱ Has ╲
                       ╱Predetermined Time╲
                      ╱ Elapsed Since Previous ╲ ──── NO ───┐
                       ╲Shutter Correction?╱               │
                        ╲               ╱                   │
                         ╲             ╱                    │
                          ╲_____╱                     │
                           │                                │
                           │ YES                            │
                           ▼                                │
              ┌─────────────────────────┐                  │
              │    Shutter Correction    │── ST2            │
              └─────────────────────────┘                  │
                           │◄───────────────────────────────┘
                           ▼
              ┌─────────────────────────┐
              │    Stereo Correction     │── ST3
              └─────────────────────────┘
                           │
                           ▼
              ┌─────────────────────────┐
              │  Temperature Correction  │── ST4
              └─────────────────────────┘
                           │
                           ▼
              ┌─────────────────────────┐
              │ Output Temperature Image │── ST5
              └─────────────────────────┘
                           │
                           ▼
                    ┌─────────────┐
                    │     END     │
                    └─────────────┘
```

# FIG. 3

```
          START
            │
            ▼
   ┌──────────────────┐
   │   Close Shutter  │ ─── ST1-1
   └──────────────────┘
            │
            ▼ ◄──────────────────┐
   ┌──────────────────┐          │
   │ Acquire Shutter  │ ─── ST1-2│
   │      Image       │          │
   └──────────────────┘          │
            │                    │
            ▼                    │
   ┌──────────────────┐          │
   │ Calculate Luminance         │
   │ Calibration Parameter│ ─ ST1-3│
   └──────────────────┘          │
            │            ST1-4   │
            ▼                    │
   ┌──────────────────┐          │
   │   Change Filter  │ ─────────┘
   └──────────────────┘
            │
            ▼
   ┌──────────────────┐
   │   Open Shutter   │ ─── ST1-5
   └──────────────────┘
            │
            ▼
           END
```

# FIG. 4

```
          ┌─────────────┐
          │    START    │
          └──────┬──────┘
                 │
                 ▼
    ┌────────────────────────┐
    │      Change Filter     │  ～ST2-1
    └────────────┬───────────┘
                 │
                 ▼
    ┌────────────────────────┐
    │ Acquire Single Band Image │  ～ST2-2
    └────────────┬───────────┘
                 │
                 ▼
    ┌────────────────────────┐
    │   Luminance Calibration │  ～ST2-3
    └────────────┬───────────┘
                 │
                 ▼
    ┌────────────────────────┐
    │      Pixel Matching     │  ～ST2-4
    └────────────┬───────────┘
                 │
                 ▼
    ┌────────────────────────┐
    │     Estimate Distance   │  ～ST2-5
    └────────────┬───────────┘
                 │
                 ▼
          ┌─────────────┐
          │     END     │
          └─────────────┘
```

# FIG. 5

START

Change Filter ~ST3-1

Acquire Multiband Image ~ST3-2

Luminance Calibration ~ST3-3

Luminance Correction ~ST3-4

Emissivity Correction ~ST3-5

END

# FIG. 6A

102

Processing
Circuit

100

Input
Interface

101

Output
Interface

# FIG. 6B

103

Processor

104

Memory

100

Input
Interface

101

Output
Interface

# FIG. 7

FIG. 8

```
                    ┌─────────────┐
                    │    START    │
                    └──────┬──────┘
                           │
                           ▼
                      ╱╲        ST1
                    ╱      ╲
                  ╱   Has    ╲
          ╱  Predetermined Time  ╲
        ╱  Elapsed Since Previous  ╲    NO
          ╲   Shutter Correction? ╱
            ╲                    ╱
              ╲               ╱
                ╲          ╱
                   ╲    ╱
                    ╲ ╱
                     │ YES
                     ▼
         ┌───────────────────────┐
         │   Shutter Correction  │~ST2
         └───────────┬───────────┘
                     │◄──────────────────┐
                     ▼
         ┌───────────────────────┐
         │    Stereo Correction  │~ST3
         └───────────┬───────────┘
                     ▼
         ┌───────────────────────┐
         │  Filter Optimization and │~ST4A
         │  Temperature Correction  │
         └───────────┬───────────┘
                     ▼
         ┌───────────────────────┐
         │ Output Temperature Image│~ST5
         └───────────┬───────────┘
                     ▼
                ┌─────────┐
                │   END   │
                └─────────┘
```

# FIG. 9

```
        ( START )
            |
   ┌─────────────────┐
   │  Change Filter  │ ～ST4A-1
   └─────────────────┘
            |
   ┌─────────────────────────┐
   │ Acquire Multiband Image │ ～ST4A-2
   └─────────────────────────┘
            |
   ┌─────────────────────────┐
   │  Luminance Calibration  │ ～ST4A-3
   └─────────────────────────┘
            |
   ┌─────────────────────────┐
   │  Luminance Correction   │ ～ST4A-4
   └─────────────────────────┘
            |
   ┌─────────────────────────┐
   │  Emissivity Correction  │ ～ST4A-5
   └─────────────────────────┘
            |                        ST4A-6
         ◇ Is Filter Optimal for ◇──NO──→┌─────────────────┐
           Target Temperature?           │  Change Filter  │ ～ST4A-7
            |                             └─────────────────┘
           YES
            |
         ( END )
```

# FIG. 10

# FIG. 11

# FIG. 12

```
                    ( START )
                        |
                        v
                      / ST1
            Has      /
      Predetermined Time
      Elapsed Since Previous        NO
        Shutter Correction?  ------------+
                        |                 |
                        | YES             |
                        v                 |
      +---------------------------+       |
      |     Shutter Correction    |~ST2   |
      +---------------------------+       |
                        |<----------------+
                        v
      +---------------------------+
      |     Stereo Correction     |~ST3
      +---------------------------+
                        |
                        v
      +---------------------------+
      | Temperature Correction and|~ST4B
      | Temperature Image Synthesis|
      +---------------------------+
                        |
                        v
      +---------------------------+
      |  Output Temperature Image |~ST5
      +---------------------------+
                        |
                        v
                    (  END  )
```

# FIG. 13

START

Change Filter — ST4B-1

Acquire Multiband Image — ST4B-2

Luminance Calibration — ST4B-3

Luminance Correction — ST4B-4

Emissivity Correction — ST4B-5

Are Measurements Completed by Plurality of Combinations of Filters? — ST4B-6

NO → Change Filter — ST4B-7

YES

Synthesize Temperature Image — ST4B-8

END

FIG. 14

EP 4 624 881 A1

# FIG. 15

START

Has Predetermined Time Elapsed Since Previous Shutter Correction? ⌐ST1

NO

YES

Shutter High Accuracy Correction ~ST2A

Stereo Correction ~ST3

Temperature Correction ~ST4

Output Temperature Image ~ST5

END

# FIG. 16

START

Close Shutter — ST2A-1

Acquire Shutter Image — ST2A-2

Shutter Luminance Measurement — ST2A-3

Reference Plate Luminance and Temperature Measurement — ST2A-4

Calculate Shutter Temperature — ST2A-5

Calculate Luminance Calibration Parameter — ST2A-6

Change Filter — ST2A-7

Open Shutter — ST2A-8

END

## INTERNATIONAL SEARCH REPORT

| International application No. |
| --- |
| **PCT/JP2023/001990** |

**A.     CLASSIFICATION OF SUBJECT MATTER**

*G01J 5/48*(2022.01)i; *G01J 5/60*(2006.01)i; *G01S 3/782*(2006.01)i
FI:    G01J5/48 E; G01J5/60 E; G01S3/782 B

According to International Patent Classification (IPC) or to both national classification and IPC

**B.     FIELDS SEARCHED**

Minimum documentation searched (classification system followed by classification symbols)

G01J 5/00-5/90; G01J 1/02; G01J 1/42-1/46; G01B 11/00-11/30; G01C 3/00-3/32; G01S 3/78-3/789; H04N 5/222-5/257; H04N 7/18; H04N 23/00; H04N 23/40-23/76; H04N 23/90-23/959

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| Y | JP 2019-144498 A (OLYMPUS CORPORATION) 29 August 2019 (2019-08-29)<br>    paragraphs [0044]-[0050], [0119]-[0125], fig. 18 | 1-6, 10 |
| A | | 7-9 |
| Y | JP 2022-079798 A (HITACHI, LTD.) 27 May 2022 (2022-05-27)<br>    paragraphs [0016]-[0022], fig. 1 | 1-6, 10 |
| A | | 7-9 |
| Y | JP 2014-115262 A (TOYOTA JIDOSHA KABUSHIKI KAISHA) 26 June 2014 (2014-06-26)<br>    paragraphs [0027]-[0037], fig. 2-3 | 1-6, 10 |
| A | | 7-9 |
| Y | JP 2002-214039 A (RICOH COMPANY, LTD.) 31 July 2002 (2002-07-31)<br>    paragraphs [0008]-[0010], fig. 1-2 | 2-6 |
| A | JP 2018-179956 A (ADE TECH INC.) 15 November 2018 (2018-11-15)<br>    entire text, fig. 1-11 | 1-10 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 April 2023** | **18 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/001990** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2018-179814 A (UACJ CORP.) 15 November 2018 (2018-11-15)<br>entire text, fig. 1-8 | 1-10 |
| A | JP 2016-075615 A (MITSUBISHI ELECTRIC CORPORATION) 12 May 2016 (2016-05-12)<br>entire text, fig. 1-17 | 1-10 |
| A | JP 03-021831 A (TANAKA KIKINZOKU KOGYO KK) 30 January 1991 (1991-01-30)<br>entire text, fig. 1-6 | 1-10 |

Form PCT/ISA/210 (second sheet) (January 2015)

## INTERNATIONAL SEARCH REPORT
### Information on patent family members

International application No.

**PCT/JP2023/001990**

| Patent document cited in search report | | | Publication date (day/month/year) | Patent family member(s) | Publication date (day/month/year) |
|---|---|---|---|---|---|
| JP | 2019-144498 | A | 29 August 2019 | US 2019/0265459 A1 paragraphs [0072]-[0083], [0184]-[0192], fig. 18 | |
| JP | 2022-079798 | A | 27 May 2022 | (Family: none) | |
| JP | 2014-115262 | A | 26 June 2014 | (Family: none) | |
| JP | 2002-214039 | A | 31 July 2002 | (Family: none) | |
| JP | 2018-179956 | A | 15 November 2018 | US 2018/0302555 A1<br>TW 201839367 A<br>CN 108731819 A | |
| JP | 2018-179814 | A | 15 November 2018 | (Family: none) | |
| JP | 2016-075615 | A | 12 May 2016 | (Family: none) | |
| JP | 03-021831 | A | 30 January 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016075615 A